# EUROPÄISCHE PATENTSCHRIFT

(11) **EP 1 560 866 B1**
(45) Veröffentlichungstag und Bekanntmachung des Hinweises auf die Patenterteilung: **23.07.2008**
(21) Anmeldenummer: 03779897.2
(22) Anmeldetag: 12.11.2003
(51) Int. Cl.: C08G 18/76, C08G 18/28, C09J 175/04, C08J 9/04

(54) **SILYLGRUPPEN ENTHALTENDE PRÄPOLYMERE, DEREN HERSTELLUNG UND VERWENDUNG IN MONTAGESCHÄUMEN**
PREPOLYMERS CONTAINING SILYL GROUPS, THE PRODUCTION THEREOF, AND THE USE OF THE SAME IN POLYURETHANE FOAMS
PREPOLYMERES CONTENANT DES GROUPES SILYLE, LEUR PRODUCTION ET LEUR UTILISATION DANS DES MOUSSES DE MONTAGE

(30) Priorität: 15.11.2002 DE 10253387
(43) Veröffentlichungstag der Anmeldung: 10.08.2005
(73) Patentinhaber: Henkel AG & Co. KGaA, 40589 Düsseldorf (DE)
(72) Erfinder: BACHON, Thomas, 40597 Düsseldorf (DE); KLUTH, Hermann, 40595 Düsseldorf (DE); KLEIN, Johann, 40593 Dusseldorf (DE); KOLENDA, Felicitas, 40789 Monheim (DE); LAMBERTZ, Jennifer, 51371 Leverkusen (DE)
(86) Internationale Anmeldenummer: PCT/EP2003/012622
(87) Internationale Veröffentlichungsnummer: WO 2004/046218

(56) Entgegenhaltungen:
- EP-A- 0 261 409
- EP-A- 0 571 073
- WO-A-00/04069
- WO-A-02/066532
- DE-A- 2 238 741

## Beschreibung

Gegenstand der Erfindung ist ein Präpolymeres, das mindestens eine Gruppe der allgemeinen Formel I

-X-A-Si(Z)ₙ(OR)₃₋ₙ (I),

worin X für ein gegebenenfalls substituiertes Heteroatom, A für einen Alkylenrest mit 1 bis 12 C-Atomen, Z und R unabhängig voneinander für -CH₃ oder -CH₂-CH₃ und n für 0, 1 oder 2 steht, und gegebenenfalls mindestens eine Gruppe der allgemeinen Formel II

N(R¹)-C(O)-Y-R² (II),

worin R¹ für H oder einen linearen oder verzweigten, gesättigten oder ungesättigten Alkylrest mit 1 bis 18 C-Atomen, der Rest R² jeweils für einen linearen oder verzweigten, gesättigten oder ungesättigten Alkylrest mit 1 bis 44 C-Atomen oder einen Rest der allgemeinen Formel R³-(O-CHR⁴-CHR⁴)ₙ-, worin R³ für einen linearen oder verzweigten, gesättigten oder ungesättigten Alkylenrest mit 1 bis 44 C-Atomen, vorzugsweise mit 1 bis 12 C-Atomen oder 2 bis 8 C-Atomen und die Reste R⁴ unabhängig voneinander für H oder einen linearen oder verzweigten Alkylrest mit 1 bis 4 C-Atomen stehen, n für eine Zahl von 1 bis 1000, und Y für O, S oder NR², wobei R² die oben genannte Bedeutung zukommt, steht, aufweist und die Gesamtzahl der funktionellen Gruppen I und II im Präpolymeren mehr als 2 beträgt, Zusammensetzungen enthaltend derartige Präpolymere sowie Verfahren zu deren Herstellung und deren Verwendung.

Silylgruppenhaltige, feuchtigkeitshärtende Polymere werden häufig als weichelastische Beschichtungs-, Dichtungs- und Klebemassen im Bauwesen und in der Automobilindustrie verwendet. Bei solchen Anwendungen werden hohe Anforderungen an das Dehn- und Adhäsionsvermögen sowie an die Aushärtegeschwindigkeit gestellt. Weiterhin weisen solche silanterminierten Polymeren oft wasserabstoßende Eigenschaften auf, die daraus hergestellten Dicht-, Beschichtungs- oder Klebemassen ausgezeichnete Wasserfestigkeit und Wärmestandfestigkeit verleihen.

Aus dem Stand der Technik ist eine große Zahl alkoxysilanterminierter Polymerer bekannt, die insbesondere als weichelastische Dichtungs-, Beschichtungs- und Klebemassen eingesetzt werden. Das Haupteinsatzgebiet derartigen Verbindungen liegt dabei ausschließlich in Anwendungsfeldern, bei denen hauptsächlich auf Elastizität der hergestellten Massen Wert gelegt wird. Es ist jedoch in der Regel nicht möglich, die aus dem Stand der Technik bekannten, Silylgruppen tragenden Polymeren in Anwendungsgebieten einzusetzen, bei denen ein besonders schnelles Abbinden der Bindemittel und eine besonders geringe Elastizität der entstehenden Polymeren erforderlich ist oder zumindest gewünscht wird.

Ein schnelles Abbinden von Klebstoffen, Dichtstoffen und ähnlichen Zusammensetzungen bringt eine Reihe von Vorteilen mit sich, die vom Anwender häufig gewünscht werden. So lassen sich mit schnell abbindenden Klebstoffen beispielsweise Verklebungen vornehmen, bei denen eine langanhaltende Fixierung der zu verklebenden Substrate zu aufwendig ist. Auch die Anwendung von Dichtstoffen erfordert häufig ein schnelles Abbinden der entsprechenden Dichtmassen um eine Zeitersparnis beim Dichtvorgang zu erzielen oder eine langwierige Fixierung der zu behandelnden Teile zu vermeiden.

Bislang wurden solche Silylgruppen enthaltenden Systeme jedoch üblicherweise zur Herstellung elastisch aushärtender Polymere, insbesondere im Klebstoff und Dichtbereich eingesetzt. Dabei geht aus dem Stand der Technik hervor, dass das Schäumen der bislang bekannten Präpolymerzusammensetzungen üblicherweise zu druckelastischen Polymeren führt.

So beschreibt beispielsweise die WO 98/28359 einen Dichtstoff auf Basis silanmodifizierter Polymerer und feinteiliger Füllstoffe, der sich mit Hilfe herkömmlicher Verschäumungsgeräte zu geschäumten Formkörpern verarbeiten lässt, die nach Druckbelastung ein hohes Rückstellvermögen aufweisen. Die beschriebenen Schäume lassen sich jedoch nicht als Montageschäume einsetzen, da sie eine zu hohe Elastizität aufweisen.

Die WO 00/04069 beschreibt eine Präpolymerabmischung zur Erzeugung von Dicht- und Dämmschäumen, wobei die Präpolymerabmischung eine Präpolymerkomponente, eine Treibgaskomponente und zur Schaumbildung benötigte übliche Zusatzstoffe enthält, wobei die Präpolymerabmischung als Präpolymerkomponente ein silylgruppenterminiertes Polyurethanpräpolymeres mit wenigstens zwei Si(OR)ₓ(R)₃₋ₓ-Gruppen im Molekül ist, wobei R jeweils für einen Alkylrest mit 1 bis 6 C-Atomen steht und x eine ganze Zahl von 1 bis 3 ist. Die beschriebenen Polymeren eignen sich zwar zur Herstellung von harten Schäumen, die Produkte erfüllen jedoch im Hinblick auf Hitzestabilität, Feuerstabilität oder Brandverhalten nicht immer die gestellten Anforderungen.

Die DE 22 38 741 A1 betrifft ein Verfahren zur Linearisierung vernetzter Isocyanat-Polyadditionsprodukte mit Polyisocyanaten sowie deren Verwendung. Die EP 0 261 409 A1 betrifft alkoxysilanterminierte, feuchtigkeitshärtende Polyurethane sowie ihre Verwendung für Klebe- und Dcihtungsmassen. Nachteilig bei diesen Zusammensetzungen und daraus hergestellten Zubereitungen ist, dass diese nicht frei von monomeren Isocyanaten sind.

Die WO 02/066532 A1 betrifft isocyanatfreie schäumbare Mischungen mit hoher Härtungsgeschwindigkeit, Nachteilig bei diesen Zusammensetzungen ist, dass diese sich zwar ausschäumen lassen, jedoch vielfach die daraus erhabenen Schäume zusammenfallen, bevor sie ausgehärtet sind.

Insbesondere im Bereich der Montageschäume werden bislang hauptsächlich Systeme eingesetzt, die auf der Vernetzung von Isocyanatgruppen tragenden Präpolymeren beruhen. Derartige Systeme weisen zwar überwiegend eine ausreichend schnelle Vernetzung auf, konfrontieren den Anwender jedoch mit einer Reihe von Nachteilen. So wirken Isocyanuratgruppen lebendem Gewebe gegenüber reizend und toxisch. Wenn eine Isocyanatgruppen enthaltende Abmischung beispielsweise mit Hilfe von Treibgasen abgegeben wird, kann es zu Aerosolbildung kommen woraus die Gefahr für den Anwender resultiert, dass Aerosolpartikel eingeatmet werden und zu Gesundheitsbeschwerden führen. Darüber hinaus sind die Produkte in vielen Ländern aufgrund ihres Gehalts an Isocyanatgruppen Deklarationspflichtig. Dies führt jedoch oft dazu, dass entleerte Behälter oder Behälter, die noch Restmengen des Produkts enthalten, als Sonderabfall eingestaft werden und einer besonderen Entsorgung zugeführt werden müssen. Dies senkt jedoch die Akzeptanz bei Verbrauchern, insbesondere bei Heim werkern, drastisch.

Bei den aus dem Stand der Technik bekannten Systemen wirkt sich darüber hinaus nachteilig aus, dass die eingesetzten, silylgruppenhaltigen Verbindungen üblicherweise einen hohen Gehalt an Polyethergruppen aufweisen. Solche Polyethergruppen verleihen den eingesetzten silylgruppenhaltigen Verbindungen zwar eine im Hinblick auf die Verarbeitbarkeit in einem weiten Rahmen einstellbare Viskosität. Sie führen jedoch durch ihren in der Regel weichmachenden Einfluss auf das Gesamtsystem zu wenig druckfesten und wenig belastbaren Schäumen. Darüber hinaus begünstigen Polyethergruppen durch ihre Hydrophilie das Eindringen von Feuchtigkeit in entsprechende Schäume, wodurch die Langzeitstabilität des Schaums sowie insbesondere die Formstabilität nachteilig beeinflusst wird.

Der vorliegenden Erfindung lag daher die Aufgabe zugrunde, Präpolymere auf der Basis von Silylgruppen tragenden Verbindungen zur Verfügung zu stellen, welche die Nachteile der aus dem Stand der Technik bekannten Systeme nicht aufweisen.

Insbesondere lag der vorliegenden Erfindung die Aufgabe zugrunde, Präpolymere zur Verfügung zu stellen, die keine oder im wesentlichen keine toxischen Isocyanatgruppen aufweisen. Darüber hinaus lag der vorliegenden Erfindung die Aufgabe zugrunde, Präpolymere zur Verfügung zu stellen, welche zur Herstellung von tragfähigen, belastbaren Schäumen, insbesondere zur Herstellung von Montageschäumen geeignet sind. Eine weitere Aufgabe der vorliegenden Erfindung bestand darin, Präpolymere zur Verfügung zustellen, welche im Rahmen eines Einsatzes zur Herstellung von Montageschäumen eine in weiten Grenzen einstellbare Viskosität aufweisen. Weiterhin lag der vorliegenden Erfindung die Aufgabe zugrunde, Präpolymere zur Verfügung zu stellen, welche eine schnelle Aushärtung zu belastbaren Systemen, beispielsweise Schäumen oder Klebstoffen, gewährleisten.

Es wurde nun gefunden, dass Präpolymere, die mindestens eine Gruppe der allgemeinen Formel I

-X-A-Si(Z)ₙ(OR)₃₋ₙ (I),

worin X für ein gegebenenfalls substituiertes Heteroatom, A für einen Alkylenrest mit 1 bis 12 C-Atomen, Z und R unabhängig voneinander für -CH₃ oder -CH₂-CH₃ und n für 0, 1 oder 2 steht, und mindestens eine Gruppe der allgemeinen Formel II

-N(R¹)-C(O)-Y-R² (II),

worin R¹ für H oder einen linearen oder verzweigten, gesättigten oder ungesättigten Alkylrest mit 1 bis 18 C-Atomen, der Rest R² jeweils für einen linearen oder verzweigten, gesättigten oder ungesättigten Alkylrest mit 1 bis 44 C-Atomen oder einen Rest der allgemeinen Formel R³-(O-CHR⁴-CHR⁴)ₙ-, worin R³ für einen linearen oder verzweigten, gesättigten oder ungesättigten Alkylenrest mit 1 bis 44 C-Atomen, vorzugsweise mit 1 bis 12 C-Atomen oder 2 bis 8 C-Atomen und die Reste R⁴ unabhängig voneinander für H oder einen linearen oder verzweigten Alkylrest mit 1 bis 4 C-Atomen stehen, n für eine Zahl von 1 bis 1000, und Y für O, S oder NR², wobei R² die oben genannte Bedeutung zukommt, steht, aufweist und die Gesamtzahl der funktionellen Gruppen I und II im Präpolymeren mehr als 2 beträgt, sowie Präpolymere, die mindestens eine Gruppe der allgemeinen Formel I

-X-A-Si(Z)ₙ(OR)₃₋ₙ (I),

aufweisen, worin X für ein gegebenenfalls substituiertes Heteroatom, A für CH₂, Z und R unabhängig voneinander für -CH₃ oder -CH₂-CH₃ und n für 0, 1 oder 2 steht, wobei das Polymerrückgrat der Präpolymeren mindestens eine Ar-L-Ar verknüpfte aromatische Gruppe enthält, worin L für eine kovalente Bindung, einen linearen oder verzweigten, gesättigten oder ungesättigten Alkylrest mit 1 bis 6 C-Atomen, einen Cycloalkylrest mit 5 bis 12 C-Atomen, einen Arylrest oder Heteroarylrest mit 4 bis 12 C-Atomen oder einen Isocyanurat-, Allophanat-, Harnstoff-, Biuret-, Uretidon-, Carbodiimid- oder Ketoniminrest steht, eine oder mehrere der oben genannten Aufgaben erfüllen.

Gegenstand der vorliegenden Erfindung ist damit ein Präpolymeres, das mindestens eine Gruppe der allgemeinen Formel I

-X-A-Si(Z)ₙ(OR)₃₋ₙ (I),

worin X für ein gegebenenfalls substituiertes Heteroatom, A für einen Alkylenrest mit 1 bis 12 C-Atomen, Z und R unabhängig voneinander für -CH₃ oder -CH₂-CH₃ und n für 0, 1 oder 2 steht, und mindestens eine Gruppe der allgemeinen Formel II

-N(R¹)-C(O)-Y-R² (II),

worin R¹ für H oder einen linearen oder verzweigten, gesättigten oder ungesättigten Alkylrest mit 1 bis 18 C-Atomen, der Rest R² jeweils für einen linearen oder verzweigten, gesättigten oder ungesättigten Alkylrest mit 1 bis 44 C-Atomen oder einen Rest der allgemeinen Formel R³-(O-CHR⁴-CHR⁴)ₙ-, worin R³ für einen linearen oder verzweigten, gesättigten oder ungesättigten Alkylenrest mit 1 bis 44 C-Atomen, vorzugsweise mit 1 bis 12 C-Atomen oder 2 bis 8 C-Atomen und die Reste R⁴ unabhängig voneinander für H oder einen linearen oder verzweigten Alkylrest mit 1 bis 4 C-Atomen stehen, n für eine Zahl von 1 bis 1000, und Y für O, S oder NR², wobei R² die oben genannte Bedeutung zukommt, steht, aufweist und die Gesamtzahl der funktionellen Gruppen I und II im Präpolymeren mehr als 2 beträgt.

Ein weiterer Gegenstand der vorliegenden Erfindung ist ein Präpolymeres, das mindestens eine Gruppe der allgemeinen Formel I

-X-A-Si(Z)ₙ(OR)₃₋ₙ (I),

aufweist, worin X für ein gegebenenfalls substituiertes Heteroatom, A für CH₂, Z und R unabhängig voneinander für -CH₃ oder -CH₂-CH₃ und n für 0, 1 oder 2 steht, wobei das Polymerrückgrat des Präpolymeren mindestens eine Ar-L-Ar verknüpfte aromatische Gruppe enthält, worin L für eine kovalente Bindung, einen linearen oder verzweigten, gesättigten oder ungesättigten Alkylrest mit 1 bis 6 C-Atomen, einen Cycloalkylrest mit 5 bis 12 C-Atomen, einen Arylrest oder Heteroarylrest mit 4 bis 12 C-Atomen oder einen Isocyanurat-, Allophanat-, Harnstoff-, Biuret-, Uretidon-, Carbodiimid- oder Ketoniminrest steht

Unter einem "Präpolymeren" wird im Rahmen der vorliegenden Erfindung eine Verbindung verstanden, die ein Molekulargewicht von mindestens etwa 300, beispielsweise mindestens etwa 500 oder mindestens etwa 700 aufweist und mindestens eine funktionelle Gruppe aufweist, die den Einbau des Präpolymeren in eine Polymerkette erlaubt. Ein "Präpolymeres" gemäß der vorliegenden Erfindung kann beispielsweise selbst bereits das Produkt einer Polyadditions-, Polykondensations- oder Polymerisationsreaktion sein, dies ist jedoch nicht zwingend erforderlich. "Präpolymere" gemäß der vorliegenden Erfindung können jedoch auch deutlich oberhalb der oben genannten Grenzen liegende Molekulargewichte aufweisen, beispielsweise mehr als etwa 1000, mehr als etwa 2000, mehr als etwa 4000, mehr als etwa 6000, mehr als etwa 8000 oder mehr als etwa 10.000.

Ein erfindungsgemäßes Präpolymeres weist im Rahmen einer bevorzugten Ausführungsform der vorliegenden Erfindung eine Struktur auf, die nach der Vernetzung des Präpolymeren im Rahmen einer Polykondensationsreaktion zu einem wenig elastischen, halbharten Werkstoff führt. Beim Einsatzes der erfindungsgemäßen Präpolymeren zur Herstellung von Schäumen, insbesondere von Montageschäumen, werden die Präpolymeren im Hinblick auf ihren molekularen Aufbau vorzugsweise so gewählt, dass sich nach der Aushärtung ein druckfester, tragfähiger Schaum ergibt. Vorzugsweise weist ein erfindungsgemäßes Präpolymeres der obengenannten Art daher im Molekülverbund mindestens eine Arylgruppe (Ar) auf. Im Rahmen einer weiteren bevorzugten Ausführungsform der vorliegenden Erfindung weist ein erfindungsgemäßes Präpolymeres im Molekülverbund zwei oder mehr Arylgruppen auf. Im Rahmen einer weiteren bevorzugten Ausführungsform werden mindestens 5% des gesamten Molekulargewichts des Präpolymeren, vorzugsweise mindestens 10 oder mindestens 15 Gew.-% des Molekulargewichts des Präpolymeren durch Arylgruppen gebildet. Besonders geeignet sind beispielsweise Präpolymere, die mehr als etwa 30 Gew.-% Arylgruppen aufweisen.

Besonders als Basis für eine Struktur, wie sie einem erfindungsgemäßen Präpolymeren zugrunde liegt geeignet, sind Verbindungen, die mindestens zwei Arylgruppen Ar aufweisen, die über eine Verbindungsstruktur L, wobei L für eine kovalente Bindung, einen linearen oder verzweigten, gesättigten oder ungesättigten Alkylrest mit 1 bis 6 C-Atomen, einen Cycloalkylrest mit 5 bis 12 C-Atomen, einen Arylrest oder Heteroarylrest mit 4 bis 12 C-Atomen oder beispielsweise einen Isocyanurat-, Allophanat-, Harnstoff-, Biuret-, Uretidon-, Carbodiimid- oder Ketoniminrest steht, verknüpft sind. Besonders geeignet sind dabei Strukturen, wie sie sich beispielsweise auf Basis von mehrkernigen aromatischen Polyisocyanaten wie Polymer-MDI oder auf Basis von aromatischen Polykondensaten, insbesondere Anilin-Formaldehyd-Harzen erhalten lassen.

Ein erfindungsgemäßes Präpolymeres weist im Rahmen der vorliegenden Erfindung mindestens eine Gruppe der allgemeinen Formel I

-X-A-Si(Z)ₙ(OR)₃₋ₙ (I)

auf, worin X für ein gegebenenfalls substituiertes Heteroatom, A für einen Alkylenrest mit 1 bis 12 C-Atomen, Z und R unabhängig voneinander für -CH₃ oder -CH₂-CH₃ und n für 0, 1 oder 2 steht.

Im Rahmen einer bevorzugten Ausführungsform der vorliegenden Erfindung beträgt die Zahl der Gruppen der allgemeinen Formel I in einem erfindungsgemäßen Präpolymeren durchschnittlich mehr als 1, beispielsweise mehr als etwa 1,1 oder mehr als etwa 1,5 oder mehr als etwa 1,8 oder 2 oder mehr, beispielsweise bis zu etwa 100 oder bis zu etwa 50 oder bis zu etwa 10.

Gemäß der allgemeinen Formel I steht X für einen gegebenenfalls substituiertes Heteroatom. Geeignete Heteroatome sind beispielsweise O, S oder N, insbesondere jedoch N. Als Substituenten für N als Heteroatom eignen sich grundsätzlich H sowie lineare oder verzweigte, gesättigte oder ungesättigte, gegebenenfalls ebenfalls substituierte Alkylreste mit 1 bis 24 C-Atomen oder gesättigte oder ungesättigte, gegebenenfalls ebenfalls substituierte Cycloalkylreste mit 5 bis 24 C-Atomen oder gegebenenfalls substituierte Aryl- oder Heteroarylreste mit 5 bis 24 C-Atomen. Als Substituenten für die Alkyl-, Cycloalkyl oder Arylreste eignen sich beispielsweise Halogenatome, OH- oder NH-Gruppen oder COOH-Gruppen.

Im Rahmen einer bevorzugten Ausführungsform der vorliegenden Erfindung steht A für einen linearen Alkylrest mit 1, 2, 3 oder 4, insbesondere 1, 2 oder 3 C-Atomen.

Neben mindestens einer Gruppe der allgemeinen Formel I enthält einen erfindungsgemäßes Präpolymeres noch mindestens eine Gruppe der allgemeinen Formel II

-N(R¹)-C(O)-Y-R² (II),

worin R¹ für H oder einen linearen oder verzweigten, gesättigten oder ungesättigten Alkylrest mit 1 bis 18 C-Atomen, der Rest R² jeweils für einen linearen oder verzweigten, gesättigten oder ungesättigten Alkylrest mit 1 bis 44 C-Atomen oder einen Rest der allgemeinen Formel R³-(O-CHR⁴-CHR⁴)ₙ-, worin R³ für einen linearen oder verzweigten, gesättigten oder ungesättigten Alkylenrest mit 1 bis 44 C-Atomen, vorzugsweise mit 1 bis 12 C-Atomen oder 2 bis 8 C-Atomen und die Reste R⁴ unabhängig voneinander für H oder einen linearen oder verzweigten Alkylrest mit 1 bis 4 C-Atomen stehen, n für eine Zahl von 1 bis 1000, und Y für O, S oder NR², wobei R² die oben genannte Bedeutung aufweist, steht. Im Rahmen einer bevorzugten Ausführungsform der vorliegenden Erfindung steht Y für O oder NR², insbesondere für O.

Ein erfindungsgemäßes Präpolymeres weist mit dem Rest R² einen Molekülbestandteil auf, der einerseits variabel gestaltbar ist, andererseits jedoch nicht an einer Vernetzungsreaktion teilnimmt. Der Rest R² erlaubt jedoch eine einfache gezielte Beeinflussung verschiedenster Eigenschaften des Präpolymeren in Abhängigkeit von der Gestaltung des Restes R². So können beispielsweise Eigenschaften wie Hydrophobie, Hydrophilie oder Viskosität des Präpolymeren sowie Hydrophobie, Hydrophilie und Elastizität des aus einem solchen Präpolymeren hergestellten Werkstoffs durch Variation der Eigenschaften des Restes R² in weiten Bereichen maßgeschneidert werden.

So kann beispielsweise die durch die grundlegende Molekülstruktur eines Präpolymeren vorgegebene Eigenschaften eines nach einer Vernetzung des Präpolymeren resultierenden Werkstoffs durch die Wahl eines kurzkettigen Restes R², beispielsweise eines Alkylrest mit 1 bis etwa 6 C-Atomen im wesentlichen unverändert oder nur geringfügig veränderten beibehalten werden. Die Wahl eines langkettigen Restes R², beispielsweise eines Alkylrests mit 7 bis etwa 28 C-Atomen, kann zu einer Hydrophobierung, zu einer Absenkung der Viskosität des Präpolymeren sowie zu einem weicheren Endprodukt führen.

Im Rahmen einer bevorzugten Ausführungsform der vorliegenden Erfindung weist ein erfindungsgemäßes Präpolymeres jedoch Reste R² des Typs R³-(O-CHR⁴-CHR⁴)ₙ- auf. Es handelt sich bei den hier dargestellten Resten um Verbindungen des Polyethertyps. In der dargestellten allgemeinen Formel stehen die Reste R⁴ unabhängig voneinander vorzugsweise für H oder CH₃, wobei es besonders bevorzugt ist, wenn entweder beide Reste für H oder einer der Reste R⁴ für H und einer der Reste R⁴ für CH₃ steht. Die obenstehende allgemeinen Formel ist dabei so auszulegen, dass innerhalb der Polyetherkette -(O-CHR⁴-CHR⁴)ₙ-, sofern die Polyetherkette mehr als eine Wiederholungseinheit aufweist, n also für eine Zahl von mehr als 1 steht, die Bedeutung der Reste R⁴ variieren kann. Im Rahmen einer bevorzugten Ausführungsform der vorliegenden Erfindung kann eine solche Polyetherkette daher beispielsweise als Homopolymeres, statistisches Copolymeres oder Blockcopolymeres aufgebaut sein. Die Zahl der an einem solchen Copolymeren beteiligten unterschiedlichen Monomertypen kann beispielsweise bis zu etwa 5 betragen, vorzugsweise sind an einem entsprechenden Copolymeren jedoch zwei oder drei, vorzugsweise zwei unterschiedliche Monomeren beteiligt.

Der Rest R³ steht vorzugsweise für eine lineare Alkylengruppe mit 2 C-Atomen oder eine lineare oder verzweigte Alkylengruppe mit 3, 4, 5 oder 6 C-Atomen.

Im Rahmen einer weiteren bevorzugten Ausführungsform der vorliegenden Erfindung setzt sich eine entsprechende Polyetherkette aus Polyethylenoxid-Einheiten oder Polypropylenoxid-Einheiten oder statistischen oder blockweisen Gemischen von Polyethylenoxid-Einheiten und Polypropylenoxid-Einheiten zusammen.

Die Kettenlänge solcher Polyetherketten liegt beispielsweise bei 1 bis etwa 1000 Wiederholungseinheiten, mithin steht also der Parameter n für eine Zahl von 1 bis etwa 1000. Im Rahmen einer bevorzugten Ausführungsform der vorliegenden Erfindung steht n jedoch für eine Zahl von etwa 1 bis etwa 20, insbesondere etwa 2 bis etwa 5.

Die Gesamtzahl der funktionellen Gruppen I und II in einem erfindungsgemäßen Präpolymeren beträgt im Rahmen der vorliegenden Erfindung mehr als 2. Die Gesamtzahl kann dabei beispielsweise mehr als etwa 2,1, 2,2, 2,3, 2,5, 2,8 oder mehr als 3 betragen. Die Obergrenze für die Gesamtzahl an funktionellen Gruppen I und II im erfindungsgemäßen Präpolymeren beträgt etwa 200, vorzugsweise liegt die Obergrenze jedoch bei etwa 50 oder weniger, beispielsweise bei etwa 30 oder etwa 20 oder etwa 15 oder etwa 10. Bei der genannten Gesamtzahl handelt es sich im Rahmen der vorliegenden Erfindung um eine Durchschnittszahl. So ist es beispielsweise möglich, dass ein erfindungsgemäßes Präpolymeres sich aus Verbindungen mit unterschiedlichen Molekulargewichts und einer unterschiedlichen Zahl an funktionellen Gruppen zusammensetzt. In einem solchen Fall wird die Gesamtzahl der funktionellen Gruppen I und II über alle in einem solchen Gemisch vorliegenden Verbindungen gemittelt. Daraus ergibt sich dann die Durchschnittszahl.

Ein erfindungsgemäßes Präpolymeres weist im Rahmen der vorliegenden Erfindung durchschnittlich insgesamt mehr als etwa 2 Gruppen der allgemeinen Formel I und der allgemeinen Formel II auf. Es ist dabei erfindungsgemäß vorgesehen, dass die Zahl der funktionellen Gruppen gemäß der allgemeinen Formel I und die Zahl der funktionellen Gruppen gemäß der allgemeinen Formel II identisch ist. Es wird jedoch erfindungsgemäß bevorzugt, wenn die Zahl der funktionellen Gruppen gemäß der allgemeinen Formel I die Zahl der funktionellen Gruppen der allgemeinen Formel II übersteigt. Vorzugsweise beträgt das Verhältnis von funktionellen Gruppen der allgemeinen Formel I zu funktionellen Gruppen der allgemeinen Formel II etwa 10 bis etwa 3, insbesondere etwa 6 bis etwa 4.

Ein erfindungsgemäßes Präpolymeres weist im Rahmen einer weiteren bevorzugten Ausführungsform der vorliegenden Erfindung pro Molekül durchschnittlich mindestens eine Harnstoffgruppe auf. Die Zahl der Harnstoffgruppen kann dabei auch höher sein, beispielsweise mehr als 1, mehr als 1,5 oder 2 oder mehr. Die Obergrenze für die Zahl der Harnstoffgruppen pro Molekül ist mit der Obergrenze für die Zahl der funktionellen Gruppen gemäß Formel I und II identisch. Die tatsächliche Zahl der Harnstoffgruppen kann jedoch unterhalb dieser Obergrenze liegen.

Ein erfindungsgemäßes Präpolymeres der oben beschriebenen Art kann grundsätzlich auf beliebige Weise hergestellt werden. Dabei wird von einem Basismolekül ausgegangen, dass im Rahmen eines oder mehrerer Umsetzungsschritte mit den entsprechenden funktionellen Gruppen der allgemeinen Formel I und der allgemeinen Formel II ausgestattet wird.

Vorzugsweise eignen sich als Basismoleküle Verbindungen, die über Aminogruppen oder Isocyanatgruppen verfügen, da sich an derartigen Basismolekülen die entsprechenden funktionellen Gruppen auf einfache und schonende Weise anbringen lassen.

In einer bevorzugten Ausführungsform der vorliegenden Erfindung werden daher als Basismoleküle Polyisocyanate bzw. Polyamine eingesetzt. Beispiele für geeignete Isocyanate sind die Dimerisierungs- oder Trimerisierungsprodukte der Diisocyanate 2,4-Toluylendiisocyanat (2,4-TDI), 2,6-Toluylendiisocyanat (2,6-TDI), oder ein Gemisch der genannten Isomeren, 2,2'-Diphenylmethandiisocyanat (2,2'-MDI), 2,4'-Diphenylmethandiisocyanat (2,4'-MDI), 4,4'-Diphenylmethandiisocyanat (4,4'-MDI), 1,5-Naphthylendiisocyanat (NDI), 1,4-Phenylendiisocyanat, 1,3-Tetramethylxylylendiisocyanat (TMXDI), hydriertes MDI (HMDI), Isophorondiisocyanat (IPDI), Hexamethylendiisocyanat-1,6 (HDI), 2-Isocyanatopropylcyclohexylisocyanat (IPCI), 2-Butyl-2-ethyl-pentamethylendiisocyanat (BEPDI), Lysindiisocyanat (LDI), 1,12-Dodecyldiisocyanat, Cyclohexyl-1,3- oder -1,4-diisocyanat, 2-Methylpentamethylendiisocyanat (MPDI) oder dergleichen, beispielsweise enthaltend Urethan-, Allophanat-, Harnstoff-, Biuret-, Uretidon-, Carbidiimid- oder Ketonimingruppen wie sie durch Dimerisierung oder Trimerisierung der oben genannten Diisocyanate entstehen. Besonders geeignet sind oligomere oder polymere Isocyanatgruppen tragende Verbindungen, wie sie beispielsweise bei der Isocyanatherstellung anfallen oder als Restprodukte bei der Destillierung von Isocyanatrohprodukten im Destillationssumpf verbleiben. Beispiele für in diesem Zusammenhang besonders geeignete Materialien sind Roh-MDI, wie es direkt nach der Herstellung von MDI erhältlich ist, und Polymer-MDI, wie es nach der Destillation von MDI aus dem Roh-MDI im Destillationssumpf verbleibt.

Ebenfalls als Basismoleküle im Rahmen der vorliegenden Erfindung geeignet sind entsprechend die Aminoäquivalente der obengenannten Verbindungen.

Weiterhin eignen sich als Basismoleküle Verbindungen, die eine Vielzahl von Arylgruppen und Aminogruppen in Molekül aufweisen. Besonders geeignet sind dabei Polykondensate, wie sie sich aus der Polykondensation von Formaldehyd und Anilin ergeben. Geeignete Polykondensate weisen beispielsweise ein Molekulargewicht von etwa 500 bis etwa 100.000, insbesondere etwa 2000 bis etwa 20000 auf.

Zum Einführen der einzelnen Gruppen gemäß der allgemeinen Formel I in die Präpolymere werden die oben beschriebenen Basismoleküle mit geeigneten, Alkoxysilylgruppen tragenden Verbindungen umgesetzt.

Wenn das Basismolekül zur Verknüpfung der funktionellen Gruppe der allgemeinen Formel I mit den Basismolekülen eine Isocyanatgruppen trägt, so eignen sich zum Einbringen der funktionellen Gruppen der allgemeinen Formel I besonders Silylgruppen tragende Aminoverbindungen.

Geeignete Aminoverbindungen mit mindestens einer Silylgruppe sind beispielsweise H₂N-(CH₂)₃-Si(O-CH₃)₃, H₂N-(CH₂)₃-Si(O-C₂H₅)₃, H₂N-CH₂-Si(O-CH₃)₃, H₂N-CH₂-Si(O-C₂H₅)₃, H₂N-(CH₂)₂-NH-(CH₂)₃-Si(O-CH₃)₃, H₂N-(CH₂)₂-NH-(CH₂)₃-Si(O-C₂H₅)₃, H₂N-(CH₂)₃-Si(CH₃)(O-CH₃)₂, H₂N-(CH₂)₃-Si(CH₃)(O-C₂H₅)₂, H₂N-CH₂-Si(CH₃)(O-CH₃)₂, H₂N-CH₂-Si(CH₃)(O-C₂H₅)₂, H₂N-(CH₂)₂-NH-(CH₂)₃-Si(CH₃)(O-CH₃)₂, H₂N-(CH₂)₂-NH-(CH₂)₃-Si(CH₃)(O-C₂H₅)₂, NH(C₆H₅)-(CH₂)₃-Si(O-CH₃)₃, NH(C₆H₅)-(CH₂)₃-Si(O-C₂H₅)₃, NH(C₆H₅)-CH₂-Si(O-CH₃)₃, NH(C₆H₅)-CH₂-Si(O-C₂H₅)₃, H₂N-(CH₂)₂-NH-(CH₂)₃-Si(O-CH₃)₃, H₂N-(CH₂)₂-NH-(CH₂)₃-Si(O-C₂H₅)₃, NH(C₆H₁₁)-(CH₂)₃-Si(O-CH₃)₃, NH(C₆H₁₁)-(CH₂)₃-Si(O-C₂H₅)₃, NH(C₆H₁₁)-CH₂-Si(O-CH₃)₃, NH(C₆H₁₁)-CH₂-Si(O-C₂H₅)₃, NH(C₄H₉)-(CH₂)₃-Si(O-CH₃)₃, NH(C₄H₉)-(CH₂)₃-Si(O-C₂H₅)₃, NH(C₄H₉)-CH₂-Si(O-CH₃)₃, NH(C₄H₉)-CH₂-Si(O-C₂H₅)₃, H₂N-CH(CH₃)-CH₂-Si(O-CH₃)₃, H₂N-CH₂-CH₂-O-CH₂-CH₂-Si(O-CH₃)₃, H₂N-CH₂-CH₂-NH-CH₂-CH₂-Si(O-CH₃)₃ sowie Gemische aus zwei oder mehr davon.

Neben den obengenannten Aminosilanen können im Rahmen einer bevorzugten Ausführungsform der vorliegenden Erfindung auch Aminosilane eingesetzt werden, die an dem Stickstoffatom, welches zur Anbindung an das Basismolekül eingesetzt wird, einen Substituenten tragen. Besonders geeignet sind hierbei Alkoxysilan- und Aminogruppen aufweisende Verbindungen der allgemeinen Formel III 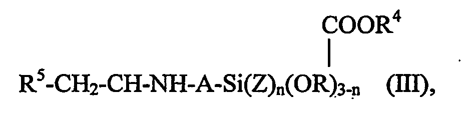 worin A, Z und n die bereits obengenannten Bedeutungen aufweisen und die Reste R⁴ und R⁵ unabhängig voneinander für gegenüber Isocyanatgruppen inerte organische Reste, beispielsweise Wasserstoff (nur R5), CH₃, lineare oder verzweigte, gesättigte oder ungesättigte C₂-C₂₂-Alkylreste, Aryl- oder Heteroarylreste, Etherreste oder Reste der allgemeinen Formel COOR⁴ stehen. Derartige Aminosilane lassen sich beispielsweise dadurch herstellen, dass man innerhalb eines Temperaturbereichs von 0 bis etwa 100 °C Aminosilane der allgemeinen Formel IV

H₂N-A-Si(Z)ₙ(OR)₃₋ₙ (IV)

mit Estern ungesättigter Carbonsäuren, beispielsweise Acryl-, Malein- oder Fumarsäureestern der allgemeinen Formel V

R⁵-CH=CH-COOR⁴ (V),

worin R⁵ für H oder COOR⁴ steht und worin R⁴ für einen linearen oder verzweigten, gesättigten oder ungesättigten Alkylrest mit 1 bis etwa 8 C-Atomen steht, oder einem Gemisch aus zwei oder mehr solcher Malein- oder Fumarsäureester umsetzt.

Besonders als Aminosilane geeignet sind dabei beispielsweise die bereits oben genannten Aminosilane. Besonders geeignete Acryl-, Methacryl-, Malein- oder Fumarsäureester sind beispielsweise Acrylsäuremethylester, Acrylsäureethylester, Acrylsäurempropylester, Acrylsäurebutylester, Methacrylsäuremethylester, Methacrylsäureethylester, Methacrylsäurepropylester, Methacrylsäurebutylester, Maleinsäuredimethylester, Maleinsäurediethylester, Maleinsäuredi-n-butylester sowie die entsprechenden Fumarsäureester. Maleinsäuredimethylester und Maleinsäurediethylester sind besonders bevorzugt. Die Herstellung derartiger Verbindungen ist beispielsweise in der EP 0 596 360 A1 beschrieben.

Wenn als Basismoleküle im Rahmen der vorliegenden Erfindung zur Herstellung der erfindungsgemäßen Präpolymere Verbindungen eingesetzt werden, die Aminogruppen aufweisen, beispielsweise die bereits obengenannten Anilin-Formaldehyd-Kondensate, so werden zur Einführung der funktionellen Gruppen gemäß der allgemeinen Formel 1 Verbindungen eingesetzt, die mindestens eine funktionelle Gruppe aufweisen, die mit den Aminogruppen des Basismoleküls reagieren kann. Besonders geeignet sind hierbei Verbindungen, die eine NCO-Gruppe aufweisen.

Als geeignete Verbindungen gelten im Rahmen der vorliegenden Erfindung beispielsweise OCN-(CH₂)₃-Si(O-CH₃)₃, OCN-(CH₂)₃-Si(O-C₂H₅)₃, OCN-CH₂-Si(O-CH₃)₃, OCN-CH₂Si(O-C₂H₅)₃, OCN-(CH₂)₃-Si(CH₃)(O-CH₃)₂, OCN-(CH₂)₃-Si(CH₃)(O-C₂H₅)₂, OCN-CH₂-Si(CH₃)(O-CH₃)₂, OCN-CH₂Si(CH₃)(O-C₂H₅)₂, OCN-CH(CH₃)-CH₂-Si(O-CH₃)₃, OCN-CH₂-CH₂-O-CH₂-CH₂-Si(O-CH₃)₃, OCN-CH(CH₃)-Si(O-CH₃)₃, OCN-CH₂-CH₂-Si(O-CH₃)₃, OCN-CH₂-CH₂-Si(O-C₂H₅)₃ sowie Gemische aus zwei oder mehr davon.

Ein erfindungsgemäßes Präpolymeres weist neben mindestens einer funktionellen Gruppen gemäß der allgemeinen Formel I noch mindestens eine funktionelle Gruppe gemäß der allgemeinen Formel II auf.

Bei den Gruppen gemäß der allgemeinen Formel II handelt es sich weniger um funktionellen Gruppen im Sinne einer chemischen Funktionalität innerhalb des Moleküls. Der Begriff "funktionelle Gruppe" ist im Rahmen des vorliegenden Textes im Hinblick auf die funktionellen Gruppen gemäß der allgemeinen Formel II dahingehend auszulegen, dass diese Gruppen maßgeblich eine Funktion im Hinblick auf die Beeinflussung der physikalischen Eigenschaften des aus einem erfindungsgemäßen Präpolymeren resultierenden Werkstoffs ausüben.

Zur Einführung der funktionellen Gruppen gemäß der allgemeinen Formel II sind grundsätzlich die gleichen Mechanismen geeignet, wie sie schon im Rahmen der Einführung der funktionellen Gruppen gemäß der allgemeinen Formel I beschrieben wurden.

Es wird daher vorzugsweise von einem Basismolekül ausgegangen, das Isocyanatgruppen zur Anbindung entsprechender Reaktionspartner aufweist. Als Reaktionspartner eignen sich grundsätzlich alle Verbindungen, welche der oben genannten Definition des Rests R² entsprechen und die eine entsprechende funktionelle Gruppe zur Anbindung an das Basismolekül aufweisen. Zur Anbindung an das Basismolekül geeignete funktionelle Gruppen sind beispielsweise -OH, -SH, -NH₂ oder -NR⁵H. Im Rahmen der vorliegenden Erfindung werden zur Anbindung an das Basismolekül insbesondere Verbindungen eingesetzt, die als funktionelle Gruppe eine OH-Gruppe oder eine NH₂-Gruppe aufweisen.

Geeignet sind im Rahmen der vorliegenden Erfindung beispielsweise lineare oder verzweigte, gesättigte oder ungesättigte aliphatische, monofunktionelle Alkohole, insbesondere Methanol, Ethanol, die Isomeren des Propanols, Butanols oder Hexanols sowie Fettalkohole mit etwa 8 bis etwa 22 C-Atomen, beispielsweise Octanol, Decanol, Dodecanol, Tetradecanol, Hexadecanol oder Octadecanol eingesetzt werden. Die genannten Fettalkohole sind beispielsweise durch Reduktion von natürlichen Fettsäuren erhältlich und können sowohl als Reinsubstanzen als auch in Form ihrer technischen Gemische eingesetzt werden. Gut geeignet sind beispielsweise lineare Monoalkohole und insbesondere solche mit etwa 4 bis etwa 18 C-Atomen. Ebenso geeignet sind jedoch auch die Alkoxylierungsprodukte der genannten Alkohole mit Alkylenoxiden mit 2 bis 4 C-Atomen, insbesondere die Alkoxylierungsprodukte der genannten Alkohole mit Ethylenoxid oder Propylenoxid oder deren Gemisch, wobei das Alkoxylierungsprodukt ein Gemisch der letztgenannten Alkylenoxide sowohl blockweise als auch statistisch verteilt enthalten kann.

Wenn als Basismolekül einer Verbindung eingesetzt wird, die zur Verknüpfung mit den obengenannten funktionellen Gruppen einer Aminogruppe aufweist, so lässt sich das oben genannte Konzept selbstverständlich auch auf derartige Verbindungen übertragen. In einem solchen Fall werden zur Einführung der funktionellen Gruppen der allgemeinen Formel II Verbindungen eingesetzt, die über eine funktionelle Gruppe verfügen, die dazu in der Lage ist, eine kovalente Bindung mit einer Aminogruppe am Basismolekül einzugehen. Besonders geeignet sind hierzu Verbindungen, die eine Isocyanatgruppe aufweisen. Derartige Verbindungen lassen sich beispielsweise aus den obengenannten Verbindungen mit OH-, SH- oder NH₂-Endgruppen herstellen, indem diese Verbindungen in äquimolaren Mengen mit einem difunktionellen Isocyanat umgesetzt werden. Die bei dieser Reaktion verbleibende Isocyanatgruppe kann dann zur Anbindung an einer Aminogruppe am Basismolekül benutzt werden.

Einen Sonderfall der vorliegenden Erfindung bildet einen Präpolymeres, das mindestens eine Gruppe der allgemeinen Formel I

-X-A-Si(Z)ₙ(OR)₃₋ₙ (I),

worin X für ein gegebenenfalls substituiertes Heteroatom, A für CH₂, Z und R unabhängig voneinander für -CH₃ oder -CH₂-CH₃ und n für 0, 1 oder 2 steht, wobei das Polymerrückgrat des Präpolymeren mindestens eine Ar-L-Ar verknüpfte aromatische Gruppe enthält, worin L für eine kovalente Bindung, einen linearen oder verzweigten, gesättigten oder ungesättigten Alkylrest mit 1 bis 6 C-Atomen, einen Cycloalkylrest mit 5 bis 12 C-Atomen, einen Arylrest oder Heteroarylrest mit 4 bis 12 C-Atomen oder einen Urethan-, Allophanat-, Harnstoff-, Biuret-, Uretidon-, Carbidiimid- oder Ketoniminrest steht Solche Präpolymeren können dann zur Herstellung von Montageschäumen eingesetzt werden, wenn auf besonders schnelle Aushärtung entsprechender Schäume Wert gelegt wird. Bei derartigen Schäumen kann gegebenenfalls auf eine funktionelle Gruppe gemäß der allgemeinen Formel II verzichtet werden.

Die Herstellung derartiger Präpolymerer erfolgt wie bereits für die Herstellung der eingangs beschriebenen Präpolymeren geschildert. Vorzugsweise wird, ausgehend von einem Basismolekül mit Isocyanatgruppen, eine funktionelle Gruppe der allgemeinen Formel I in der oben beschriebenen Form am Basismolekül angebracht. Vorzugsweise werden als Basismoleküle Verbindungen auf Basis von polymerem MDI eingesetzt.

Gegenstand der vorliegenden Erfindung ist auch ein Verfahren zur Herstellung der obengenannten Präpolymeren, bei dem ein Basismolekül und eine zur Einführung einer funktionellen Gruppe gemäß der allgemeinen Formel I geeignete Verbindung sowie eine zur Einführung einer funktionellen Gruppe gemäß der allgemeinen Formel II geeignete Verbindung miteinander umgesetzt werden.

Die Reaktionsbedingungen für derartige Umsetzungen sind dem Fachmann bekannt.

Die erfindungsgemäßen Präpolymeren weisen im Rahmen einer bevorzugten Ausführungsform der vorliegenden Erfindung eine Viskosität von etwa 20000 bis etwa 1 Mio. mPas, insbesondere von etwa 50000 bis etwa 500000 mPas (gemessen mit Brookfield Rotationsviskosimeter bei 25°C) auf.

Die erfindungsgemäßen Präpolymeren eignen sich insbesondere zur Herstellung von stabilen, besonders druckfesten Montageschäumen. Hierzu werden die Präpolymeren zumindest mit einem Treibmittel vermischt. Gegenstand der vorliegenden Erfindung ist daher auch eine Zusammensetzung, mindestens enthaltend ein erfindungsgemäßes Präpolymeres oder ein Gemisch aus zwei oder mehr davon, und ein Treibmittel oder ein Gemisch aus zwei oder mehr Treibmitteln.

Geeignete Treibmittel sind beispielsweise niedrig siedende Fluorkohlenwasserstoffe, Kohlenwasserstoffe oder Ether oder Gemische aus zwei oder mehr davon. Besonders bevorzugt sind die Fluorkohlenwasserstoffe R124, R125, R134a, R142b, R143 und R152a, R227, die reinen Kohlenwasserstoffe Propan, Butan und Isobutan sowie Dimethylether, jeweils einzeln oder im Gemisch aus zwei oder mehr davon. Weiterhin können CO₂, N₂O oder N₂ als Treibmittel zugegen sein. Beliebige Kombinationen dieser Gase sind möglich. Bei Druckdosenformulierungen der erfindungsgemäßen Zusammensetzungen sind Treibgasgehalte von 5 bis 40 Gew.-%, insbesondere 5 bis 20 Gew.-%, bezogen auf die gesamte Zusammensetzung, bevorzugt. Der Gehalt an unter den herrschenden Druckverhältnissen nicht kondensierbaren Gasen sollte so bemessen sein, dass das auf den Leerraum des Druckbehälters bezogene Volumen einen Druck von etwa 8 bis 10 bar bei 50 °C ergibt, je nach den einschlägigen nationalen Vorschriften für Aerosoldosen oder Druckbehälter (sofern solche Vorschriften existieren).

Eine erfindungsgemäße Zusammensetzung enthält eines der obengenannten Treibmittel oder ein Gemisch aus zwei oder mehr davon grundsätzlich mindestens in einer Menge, die einen Austrag der erfindungsgemäßen Zusammensetzung aus einem entsprechenden Behälter und ein problemloses Aufschäumen der ausgetragenen Zusammensetzung erlaubt. Vorzugsweise enthält eine erfindungsgemäße Zusammensetzung das Treibmittel oder das Gemisch aus zwei oder mehr Treibmittel in einer Menge von etwa 10 bis etwa 25 Gew.-%, insbesondere in einer Menge von etwa 12 bis etwa 20 Gew.-%.

Zusätzlich zu den genannten Bestandteilen können die erfindungsgemäßen Zusammensetzungen noch einen oder mehrere Zusatzstoffe enthalten.

Als Zusatzstoffe eignen sich beispielsweise Trocknungshilfsmittel, Antioxidantien, Flammschutzmittel, Photostabilisatoren, Pigmentverteiler, Füllstoffe, Harze, Wachse, Weichmacher, Farbstoffe, Indikatorfarbstoffe, Mikrobizide und dergleichen.

Häufig ist es sinnvoll, die erfindungsgemäßen Zubereitungen mit Feuchtigkeitsstabilisatoren gegenüber eindringender Feuchtigkeit zu stabilisieren, um die Lagerbarkeit (shelf-life) zu erhöhen. Als Feuchtigkeitsstabilisatoren eignen sich alle Verbindungen, die mit Wasser unter Bildung einer gegenüber den in der Zubereitung vorliegenden reaktiven Gruppen inerten Gruppe reagieren, und hierbei möglichst geringe Veränderungen ihres Molekulargewichts eingehen. Weiterhin muß die Reaktivität der Stabilisatoren gegenüber in die Zubereitung eingedrungener Feuchtigkeit höher sein, als die Reaktivität der Silylgruppen des in der Zubereitung vorliegenden organischen Polymeren oder des Gemischs aus zwei oder mehr solcher Polymerer.

In einer bevorzugten Ausführungsform der vorliegenden Erfindung werden als Feuchtigkeitsstabilisatoren Silane eingesetzt. Beispielsweise Vinylsilane wie Vinyltrimethoxysilan, 3-Vinylpropyltriethoxysilan, Oximsilane wie Methyl-O,O',O"-butan-2-on-trioximosilan oder O,O',O",O'''-Butan-2-on-tetraoximosilan (CASNr. 022984-54-9 und 034206-40-1) oder Benzamidosilane wie Bis(N-Methylbenzamido)methylethoxysilan (CASNr. 16230-35-6). Vorzugsweise werden im Rahmen der vorliegenden Erfindung als Feuchtigkeitsstabilisatoren schnell mit Wasser reagierende Vinylsilane, insbesondere Vinyltrimethoxysilan eingesetzt.

Die Erfindungsgemäße Zubereitung enthält beispielsweise etwa 0,01 bis etwa 6 Gew.-%, insbesondere etwa 1 bis etwa 3 Gew.-% Feuchtigkeitsstabilisatoren.

Als Weichmacher zum Einsatz in den erfindungsgemäßen Zusammensetzungen geeignet sind beispielsweise Ester wie Abietinsäureester, Adipinsäureester, Azelainsäureester, Benzoesäureester, Buttersäureester, Essigsäureester, Ester höherer Fettsäuren mit etwa 8 bis etwa 44 C-Atomen, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester, Thiobuttersäureester, Trimellithsäureester, Zitronensäureester sowie Ester auf Nitrocellulose- und Polyvinylacetat-Basis, sowie Gemische aus zwei oder mehr davon.

Besonders geeignet sind die asymmetrischen Ester der difunktionellen, aliphatischen Dicarbonsäuren, beispielsweise das Veresterungsprodukt von Adipinsäuremonooctylester mit 2-Ethylhexanol (Edenol DOA, Fa. Cognis, Düsseldorf).

Ebenfalls als Weichmacher geeignet sind die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether (erhältlich als Cetiol OE, Fa. Cognis, Düsseldorf).

In einer weiteren bevorzugten Ausführungsform werden als Weichmacher endgruppenverschlossene Polyethylenglykole eingesetzt. Beispielsweise Polyethylen- oder Polypropylenglykoldi-C₁₋₄-alkylether, insbesondere die Dimethyl- oder Diethylether von Diethylenglykol oder Dipropylenglykol, sowie Gemische aus zwei oder mehr davon.

Ebenfalls im Rahmen der vorliegenden Erfindung als Weichmacher geeignet sind Diurethane. Diurethane lassen sich beispielsweise durch Umsetzung von Diolen mit OH-Endgruppen mit monofunktionellen Isocyanaten Herstellen, indem die Stöchiometrie so gewählt wird, dass im wesentlichen alle freien OH-Gruppen abreagieren. Gegebenenfalls überschüssiges Isocyanat kann anschließend beispielsweise durch Destillation aus dem Reaktionsgemisch entfernt werden. Eine weitere Methode zur Herstellung von Diurethanen besteht in der Umsetzung von monofunktionellen Alkoholen mit Diisocyanaten, wobei möglichst sämtliche NCO-Gruppen abreagieren.

Zur Herstellung der Diurethane auf Basis von Diolen können Diole mit 2 bis etwa 22 C-Atomen eingesetzt werden, beispielsweise Ethylenglykol, Propylenglykol, 1,2-Propandiol, Dibutandiol, Hexandiol, Octandiol oder technische Gemische von Hydroxyfettalkoholen mit etwa 14 C-Atomen, insbesondere Hydroxystearylalkohol. Bevorzugt werden lineare Diolmischungen, insbesondere solche, die Polypropylenglykol mit einem mittleren Molekulargewicht (Mₙ) von etwa 400 bis etwa 6.000 in Mengen über etwa 50 Gew.-%, insbesondere über etwa 70 Gew.-% enthalten. Ganz besonders bevorzugt werden Diurethane ausschließlich auf der Basis von Propylenglykol mit gleichen oder verschiedenen mittleren Molekulargewichten von etwa 400 bis etwa 4.000. Die freien OH-Gruppen der Diolmischungen werden im wesentlichen alle mit aromatischen oder aliphatischen Monoisocyanaten oder deren Gemischen abreagiert. Bevorzugte Monoisocyanate sind Phenylisocyanat oder Toluylenisocyanat oder deren Gemische.

Zur Herstellung der Diurethane auf Basis von Düsocyanaten werden aromatische oder aliphatische Diisocyanate oder deren Gemische eingesetzt. Als aromatische oder aliphatische Diisocyanate sind beispielsweise die Isocyanate geeignet, wie sie oben als zur Herstellung des erfindungsgemäßen Polyurethans geeignet angegeben wurden, vorzugsweise Toluylendiisocyanat (TDI). Die freien NCO-Gruppen der Düsocyanate werden im wesentlichen vollständig mit monofunktionellen Alkoholen, vorzugsweise linearen monofunktionellen Alkoholen oder Gemischen aus zwei oder mehr verschiedenen monofunktionellen Alkoholen umgesetzt. Besonders geeignet sind Gemische linearer monofunktioneller Alkohole. Geeignete Monoalkohole sind beispielsweise Monoalkohole mit 1 bis etwa 24 C-Atomen, beispielsweise Methanol, Ethanol, die Stellungsisomeren von Propanol, Butanol, Pentanol, Hexanol, Heptanol, Octanol, Decanol oder Dodecanol, insbesondere die jeweiligen 1-Hydroxy-Verbindungen, sowie Gemische aus zwei oder mehr davon. Ebenfalls geeignet sind sogenannte "technische Gemische" von Alkoholen und endgruppenverschlossene Polyalkylenglykolether. Besonders geeignet sind Alkoholgemische, die Polypropylenglykolmonoalkylether mit einem mittleren Molekulargewicht (Mₙ) von etwa 200 bis etwa 2.000 in einer Menge von mehr als etwa 50 Gew.-%, vorzugsweise mehr als etwa 70 Gew.-%, bezogen auf die Alkoholmischung, enthalten. Besonders bevorzugt werden Diurethane auf Basis von Diisocyanaten, deren freie NCO-Gruppen vollständig mittels Polypropylenglykolmonoalkylether mit einem mittleren Molekulargewicht von etwa 500 bis etwa 2.000 umgesetzt worden sind.

Die erfindungsgemäße Zubereitung enthält die genannten Weichmacher in der Regel in einer Menge von etwa 0 bis etwa 20 Gew.-%.

Die erfindungsgemäße Zubereitung kann weiterhin bis zu etwa 7 Gew.-%, beispielsweise etwa 0,01 bis etwa 5 Gew.-% üblicher Antioxidantien enthalten.

Die erfindungsgemäße Zubereitung kann weiterhin bis zu etwa 5 Gew.-% metallorganischer Katalysatoren zur Steuerung der Härtungsgeschwindigkeit enthalten. Unter metallorganischen Katalysatoren zur Steuerung der Härtungsgeschwindigkeit werden im Rahmen der vorliegenden Erfindung Verbindungen verstanden, die ein die Hartungsgeschwindigkeit beeinflussendes Metallzentrum aufweisen. Verbindungen, die ausschließlich Silylgruppen aufweisen werden ausdrücklich nicht zu den Katalysatoren zur Steuerung der Härtungsgeschwindigkeit gerechnet und nicht als solche betrachtet Als Katalysatoren sind beispielsweise metallorganische Verbindungen wie Eisen- oder Zinnverbindungen geeignet, insbesondere die 1,3-Dicarbonylverbindungen des Eisens oder des 2- bzw. 4-wertigen Zinns, insbesondere die Sn(II)-Carboxylate bzw. die Dialkyl-Sn-(IV)-Dicarboxylate oder die entsprechenden Dialkoxylate, beispielsweise Dibutylzinndilaurat, Dibutylzinndiacetat, Dioctylzinndiacetat, Dibutylzinnmaleat, Zinn(II)octoat, Zinn(II)phenolat oder die Acetylacetonate des 2- bzw. 4-wertigen Zinns.

Die erfindungsgemäße Zubereitung kann gegebenenfalls bis zu etwa 30 Gew.-% , beispielsweise etwa 0,1 bis etwa 20 Gew.-%, an Füllstoffen enthalten. Als Füllstoffe geeignet sind beispielsweise gegenüber Silylverbindungen inerte anorganische Verbindungen wie Kreide, Kalkmehl, gefällte Kieselsäure, pyrogene Kieselsäure, Zeolithe, Bentonite, gemahlene Mineralstoffe, Glaskugeln, Glasmehl, Glasfasern und Glasfaserkurzschnitte sowie weitere, dem Fachmann bekannte anorganische Füllstoffe, sowie organische Füllstoffe, insbesondere Faserkurzschnitte oder Kunststoffhohlkugeln. Gegebenenfalls können Füllstoffe eingesetzt werden, die der Zubereitung Thixotropie verleihen, beispielsweise quellbare Kunststoffe wie PVC.

Die erfindungsgemäße Zubereitung kann bis zu etwa 2 Gew.-%, beispielsweise etwa 1 Gew.-% an UV-Stabilisatoren enthalten. Als UV-Stabilisatoren besonders geeignet sind die sogenannten Hindered Amine Light Stabilisators (HALS). Es ist im Rahmen der vorliegenden Erfindung möglich, dass die erfindungsgemäße Zubereitung einen UV-Stabilisator enthält, der eine Silangruppe trägt und beim Vernetzen bzw. Aushärten in das Endprodukt eingebaut wird.

Hierzu besonders geeignet sind die Produkte Lowilite 75, Lowilite 77 (Fa. Great Lakes, USA).

Als Zusatzstoffe geeignet und oft auch erforderlich sind Schaumstabilisatoren. Ebenfalls als Zusatzstoffe geeignet sind Zellregulantien oder Stabilisatoren oder deren Gemische. Als Zusätze zur Regulierung der Schaumstruktur werden üblicherweise Verbindungen auf Silikonbasis eingesetzt. Im Rahmen einer bevorzugten Ausführungsform der vorliegenden Erfindung werden als Zellregulans insbesondere flüssiges, vernetzungsfähiges Poybutadien, Silikonöle oder Paraffinöle eingesetzt. Als Stabilisatoren werden im Rahmen einer bevorzugten Ausführungsform der Erfindung handelsübliche Silikonstabilisatoren eingesetzt.

Zur Erhöhung der Lagerstabilität der erfindungsgemäßen Zusammensetzungen eignen sich beispielsweise reaktive Silane. Geeignete reaktive Silane sind beispielsweise Tetramethoxysilan, Trimethoxymethylsilan oder Trimethoxyvinylsilan, die geeignet sind, Wasser abzufangen. Der Gehalt der erfindungsgemäßen Zusammensetzungen an derartigen Verbindungen sollte 3 Gew.-%, bezogen auf das gesamte Gemisch, nicht überschreiten.

Weiterhin als Zusatzstoffe geeignet sind Flammschutzmittel. Als Flammschutzmittel kommen beispielweise übliche phosphorhaltige Verbindungen, insbesondere elementarer Phosphor, Ester der Phosphorsäure oder Ester der Phosphonsäure in Frage, beispielsweise Triethylphosphat oder Trichlorpropylphosphat. Derartige Verbindungen können gleichzeitig weichmachende und viskositätsregulierende Eigenschaften aufweisen. Weitere geeignete Flammschutzmittel sind beispielsweise Diphenylkresylphosphate, Triphenylphosphat, Dimethylmethanphosphonat und dergleichen. Darüber hinaus können als Flammschutz auch Chlorparaffine eingesetzt werden. Ebenso geeignet sind halogenierte Polyester- oder Polyetherpolyole, beispielweise handelsübliches bromiertes Polyetherpolyol.

Als weitere Zusatzstoffe eignen sich im Rahmen der vorliegenden Erfindung organische Polymere, die Alkoxysilylgruppen tragen. Geeignete organische Polymere sind beispielsweise organische Polymere ausgewählt aus der Gruppe bestehend aus Polyurethanen, Polyestern, Polyamiden, Polyethern, Polyacrylsäureestern, Polymethacrylsäureestern, Polystyrolen, Polyolefinen wie Polybutadien oder Polyethylen, Polyvinylestern, Ethylen/α-Olefincopolymeren, Styrol/Butadiencopolymeren und α-Olefin/Vinylester Copolymeren, oder Gemischen aus zwei oder mehr davon.

Unter Polyurethanen werden im Rahmen der vorliegenden Erfindung Verbindungen verstanden, die mindestens zwei Urethangruppen im Polymerrückgrat aufweisen. Geeignete Polyurethane sind beispielsweise unter Verwendung der folgenden Bausteine herstellbar:
mindestens ein Polyol,
mindestens ein Polyisocyanat,
mindestens ein Alkoxysilan der allgemeinen Formel VI

   Y-X-A-Si(Z)ₙ(OR)₃₋ₙ, (VI)
worin Y für einen Rest mit mindestens einer mit Isocyanaten reaktiven funktionellen Gruppe, beispielsweise mindestens einer OH-, SH- oder NH-Gruppe, sofern das mit funktionellen Gruppen I auszustattende Polymere gegenüber derartigen funktionellen Gruppen reaktive Gruppen aufweist, oder mindestens einer mit OH-Gruppen oder NH-Gruppen reaktiven Gruppe, beispielsweise mindestens einer NCO-Gruppe, sofern das mit funktionellen Gruppen I auszustattende Polymere gegenüber NCO-Gruppen reaktive Gruppen aufweist, X für ein Heteroatom, A für CH₂, Z und R unabhängig voneinander für CH₃ oder CH₂-CH₃ und n für 0, 1 oder 2 steht.

Gegebenenfalls können in geeigneten Fällen zusätzlich bis zu etwa 20 Gew.-% Kettenverlängerungsmittel (Baustein d), bezogen auf das Polyurethan-Gewicht eingesetzt werden.

Als Baustein (a) eignen sich OH-terminierte Polyole oder Polyolmischungen, wie sie dem Fachmann für Polyurethanherstellung bekannt sind und üblicherweise bei der Herstellung von Polyurethanen eingesetzt werden können. Im Rahmen der vorliegenden Erfindung können Polyole aus der Gruppe der Polyetherpolyole, Polyesterpolyole, Polyetheresterpolyole, Polyalkylendiole, Polycarbonate oder Polyacetale, oder ein Gemisch aus zwei oder mehr davon, mit jeweils 2, 3, 4 oder mehr OH-Gruppen eingesetzt werden.

Die genannten Polyole und ihre Herstellung sind aus dem Stand der Technik bekannt. So können beispielsweise Polyesterpolyole durch Reaktion von Dicarbonsäuren mit Diolen oder höheren Polyolen oder einem Gemisch von Diolen und höheren Polyolen oder einem Überschuss an Diolen oder höheren Polyolen oder deren Gemisch, sowie durch Ringöffnung von epoxidierten Estern, beispielsweise von epoxidierten Fettsäureestern, mit Alkoholen hergestellt werden. Auch Polycaprolactondiole, beispielsweise herstellbar aus ε-Caprolacton und Diolen oder höheren Polyolen sind als Polyesterpolyole geeignet. Im Rahmen der vorliegenden Erfindung sind beispielsweise Polyesterpolyole einsetzbar, die aus niedermolekularen Dicarbonsäuren wie Bernsteinsäure, Glutarsäure, Adipinsäure, Isophthalsäure, Terephthalsäure oder Phthalsäure, oder einem Gemisch aus zwei oder mehr davon, mit einem Überschuß an linearen oder verzweigten, gesättigten oder ungesättigten aliphatischen Diolen mit etwa 2 bis etwa 12 Kohlenstoffatomen erhältlich sind. Gegebenenfalls kann bei der Herstellung der Polyesterpolyole noch ein geringer Anteil an höherwertigen Alkoholen vorliegen, hierzu zählen beispielsweise Glyzerin, Trimethylolpropan, Triethylolpropan, Pentaerythrit oder Zuckeralkohole, wie Sorbit, Mannit oder Glucose.

Als Polyacetale seien beispielsweise die Polykondensationsprodukte aus Formaldehyd und Diolen oder Polyolen oder deren Gemischen in Gegenwart saurer Katalysatoren genannt.

Polyalkylendiole wie Polybutadiendiol sind kommerziell erhältliche Produkte, die in verschiedenen Molekulargewichten angeboten werden. Sie eignen sich im Rahmen der vorliegenden Erfindung beispielsweise als Polyolkomponente bei der Herstellung von Polyurethanen, wie sie in den erfindungsgemäßen Zusammensetzungen eingesetzt werden können.

Polyetherpolyole können beispielsweise durch Homo-, Co- oder Blockpolymerisation von Alkylenoxiden wie Ethylenoxid, Propylenoxid oder Butylenoxid, oder Gemischen aus zwei oder mehr davon, oder durch Umsetzung von Polyalkylenglykolen mit di- oder trifunktionellen Alkoholen erhalten werden. Ebenso geeignet sind die polymerisierten Ringöffnungsprodukte von cyclischen Ethern, beispielsweise Tetrahydrofuran, mit entsprechenden Alkoholen als Startermoleküle. Wenn als Startermoleküle Esterverbindungen, beispielsweise Oligo- oder Polyester eingesetzt werden, so erhält man Polyetherester, die sowohl Ether als auch Estergruppen aufweisen. Die genannten Verbindungen sind ebenfalls als Polyolkomponente bei der Herstellung von Polyurethanen, wie sie im Rahmen der vorliegenden Erfindung in den erfindungsgemäßen Zusammensetzungen eingesetzt werden können, verwendbar.

Ebenfalls als Baustein a) einsetzbar sind mehrwertige Alkohole, wie sie beispielsweise durch Hydrierung von di- oder oligomeren Fettsäuren oder deren Estern erhältlich sind, Rizinusöl, mit C₁₋₄-Alkylalkoholen, ringgeöffnete, epoxidierte Fette oder Öle, C₁₂₋₁₈-Fettsäurediethanolamide, Monoglyceride von aliphatischen C₈₋₂₂-Fettsäuren, Polypropylenglykole oder Polysiloxane mit endständigen OH-Gruppen, oder Gemische aus zwei oder mehr der genannten Verbindungen, einsetzbar.

Geeignete Isocyanate (Baustein b) sind beliebige organische Verbindungen, die im Durchschnitt mehr als eine, insbesondere 2 Isocyanatgruppen aufweisen.

Vorzugsweise werden Diisocyanate Q(NCO)₂ eingesetzt, wobei Q für einen aliphatischen, gegebenenfalls substituierten Kohlenwasserstoffrest mit 4 bis etwa 12 Kohlenstoffatomen, einen gegebenenfalls substituierten cycloaliphatischen Kohlenwasserstoffrest mit 6 bis etwa 15 Kohlenstoffatomen, einen gegebenenfalls substituierten aromatischen Kohlenwasserstoffrest mit 6 bis etwa 15 Kohlenstoffatomen oder einen gegebenenfalls substituierten araliphatischen Kohlenwasserstoffrest mit 7 bis etwa 15 Kohlenstoffatomen steht. Beispiele für solche Diisocyanate sind Tetramethylendiisocyanat, Hexamethylendiisocyanat (HDI), Dodecamethylendiisocyanat, Dimerfettsäurediisocyanat, 1,4-Diisocyanato-cyclohexan, 1-Isocyanato-3,3,5-trimethyl-5-isocyanato-methylcyclohexan (Isophorondiisocyanat, IPDI), 4,4'-Diisocyanato-dicyclohexylmethyl, 4,4'-Diisocyanatodicyclohexylpropan-2,2, 1,3- und 1,4-Diisocyanato-benzol, 2,4- oder 2,6-Diisocyanatotoluol (2,4- oder 2,6-TDI) oder deren Gemisch, 2,2'-, 2,4 oder 4,4'-Diisocyanatodiphenylmethan (MDI), Tetramethylxylylendüsocyanat (TMXDI), p-Xylylendiisocyanat, sowie aus diesen Verbindungen bestehende Gemische.

Bevorzugt werden aliphatische Diisocyanate, insbesondere m- und p-Tetramethylxylylendiisocyanat (TMXDI) und Isophorondiisocyanat (IPDI).

Es ist selbstverständlich auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen oder Biuretgruppen aufweisende Polyisocyanate anteilig mit zu verwenden.

Als Kettenverlängerungsmittel, wie sie im Rahmen der vorliegenden Erfindung zur Herstellung der Polyurethane als Baustein d) eingesetzt werden können, eignen sich beispielsweise mehrwertige Alkohole wie Ethylenglykol, Propylenglykol, Propandiol-1,3, Butandiol-1,4, Hexandiol-1,6, Trimethylolpropan, Glyzerin, Pentaerythrit, Sorbit, Mannit oder Glucose. Auch niedermolekulare Polyesterdiole wie Bernsteinsäure-, Glutarsäure- oder Adipinsäure-bis-(hydroxyethyl)-ester, oder ein Gemisch aus zwei oder mehr davon, oder niedermolekulare, Ethergruppen aufweisende Diole, wie Diethylenglykol, Triethylenglykol, Tetraethylenglykol, Dipropylenglykol, Tripropylenglykol oder Tetrapropylenglykol können als Baustein d) mit verwendet werden. Ebenfalls geeignet sind Amine wie Ethylendiamin, Hexamethylendiamin, Piperazin, 2,5-Dimethylpiperazin, 1-Amino-3-aminomethyl-3,5,5-trimethylcyclohexan (Isophorondiamin, IPDA), 4,4'-Diamino-dicyclohexylmethan, 1,4-Diaminocyclohexan, 1,2-Diaminopropan, Hydrazin, Hydrazinhydrat, Aminosäurehydrazide wie 2-Aminoessigsäurehydrazid oder Bis-hydrazide wie Bernsteinsäurebishydrazid. Die Mitverwendung von im Sinne einer Isocyanat-Polyadditionsreaktion tri- oder höherfunktionellen Verbindungen in geringen Anteilen ist zur Erzielung eines gewissen Verzweigungsgrades ebenso möglich wie die bereits erwähnte mögliche Mitverwendung von tri- oder höherfunktionellen Polyisocyanaten zum gleichen Zweck. Einwertige Alkohole wie n-Butanol oder n-Dodecanol und Stearylalkohol können in geringen Mengen als Anteil an Baustein d) mitverwendet werden.

Bei dem als Baustein c) einsetzbaren Alkoxysilan der allgemeinen Formel V weist X die bereits für Formel I angegebene Bedeutung auf. So steht der Buchstabe X beispielsweise für O, NH, NR⁵ oder S, worin R⁵ für CH₃ oder einen linearen oder verzweigten, gesättigten oder ungesättigten Alkylrest mit 2 bis etwa 6 C-Atomen steht. Im Rahmen einer bevorzugten Ausführungsform der vorliegenden Erfindung steht der Buchstabe X für O, NH oder S, beispielsweise für O oder NH.

Der Buchstabe Y steht in Verbindungen der allgemeinen Formel V beispielsweise für H oder einen im wesentlichen beliebigen Rest, der mindestens eine OH-, SH- oder NH₂-Gruppe aufweist. In einer bevorzugten Ausführungsform der Erfindung steht X für H, H₂N-(CH₂)₂-, HO-C₂H₄- oder (HO-C₂H₄)₂-CH- oder entsprechende Reste, die eine Anbindung an beispielsweise eine NCO-Gruppe und gegebenenfalls die Integration eines Strukturelements der allgemeinen Formel I in ein Polymeres erlauben.

A steht in der allgemeinen Formel II für CH₂, Z und R stehen unabhängig voneinander für-CH₃ oder -CH₂-CH₃, vorzugsweise für -CH₃. Die Variable n steht in einer bevorzugten Ausführungsform der Erfindung für 0 oder 1, vorzugsweise für 0.

Beispiele für als Baustein c) geeignete Ausgangsmaterialien wurden bereits oben genannt.

Die Umsetzung des Bausteins a) kann in Gegenwart eines organischen, inerten in Lösemittels erfolgen. Ein derartiges Lösemittel wird in der Regel nach der Reaktion destillativ entfernt. Vorteilhafterweise wird das Polyurethan jedoch ohne Lösemittel hergestellt.

Hierzu kann beispielsweise zunächst der Baustein b) mit dem Baustein a) (Polyolkomponente) zu einem Polyurethan-Präpolymeren mit endständigen NCO-Gruppen umgesetzt werden. Anschließend können alle oder nur ein Teil der NCO-Gruppen des Präpolymeren mit dem Alkoxysilanbaustein c) umgesetzt werden. Danach können die Alkoxysilan-terminierten und gleichzeitig noch über freie NCO-Gruppen verfügende Polyurethan-Präpolymeren durch Zusatz von Kettenverlängerungsmitteln in ihrem Molekulargewicht angepasst werden. Weitere Möglichkeiten zur Herstellung der erfindungsgemäßen Polyurethane sind dem Fachmann bekannt.

Die Temperatur der Umsetzung in der ersten Stufe liegt im allgemeinen bei etwa 5 bis etwa 160 °C, vorzugsweise bei etwa 50 bis etwa 120 °C. Die Umsetzung des Präpolymeren mit dem Alkoxysilan wird bei etwa 50 bis etwa 120 °C, beispielsweise bei etwa 70 bis etwa 90 °C durchgeführt.

In einer weiteren bevorzugten Ausführungsform der vorliegenden Erfindung wird als organisches Polymeres ein Polyesterpolyol oder ein Polycarbonatpolyol eingesetzt. Als Polyester- oder als Polycarbonatpolyole sind alle Polyester- oder Polycarbonatpolyole, vorzugsweise Polyester- oder Polycarbonatdiole, mit einem Molekulargewicht von mindestens etwa 200 g/mol geeignet. Die Herstellung solcher Polyester- und Polycarbonatpolyole ist dem Fachmann bekannt.

In einer weiteren bevorzugten Ausführungsform der vorliegenden Erfindung werden als organische Polymere Polyether eingesetzt. Zu den im Rahmen der vorliegenden Erfindung geeigneten Polyethern zählen die Alkylenoxidaddukte von geeigneten Starterverbindungen, beispielsweise Wasser, Ethylenglykol, Diethylenglykol, Propylenglykol, Dipropylenglykol, Glycerin, 1,2,6-Hexantriol, 1,1,1-Trimetylolethan, Trimethylolpropan, Pentaerythrit, Sorbit, Mannit oder Glucose oder höheren Polysacchariden. Im Rahmen einer bevorzugten Ausführungsform der Erfindung werden Polyether eingesetzt, die durch Polyaddition von Ethylenoxid oder Propylenoxid oder deren Gemisch an die genannten Starterverbindungen, insbesondere die Addukte von Propylenoxid. Geeignete Polyether werden beispielsweise in der EP-B 0 184 829 und den darin genannten Dokumenten beschrieben, die, insoweit sie sich mit Polyethern befassen, Bestandteil der Offenbarung des vorliegenden Textes sind.

Geeignete silanterminierte Polyether werden entsprechend durch Umsetzung der Polyetherpolyole mit geeignet funktionalisierten Silanen hergestellt. Geeignete Silane sind beispielsweise die oben bereits genannten Alkoxysilanverbindungen.

In einer weiteren Ausführungsform der Erfindung werden als organische Polymere Polyamide eingesetzt. Polyamide lassen sich in bekannter Weise durch Umsetzung von Dicarbonsäuren mit Diaminen herstellen. Geeignete Dicarbonsäuren sind beispielsweise die im Rahmen dieses Textes bereits erwähnten, zur Herstellung von Polyestern geeigneten Dicarbonsäuren, insbesondere die Dimerfettsäuren. In einer bevorzugten Ausführungsform der vorliegenden Erfindung werden Polyamide eingesetzt, die durch Umsetzung von Dimerfettsäuren oder deren Alkylestem mit Alkoholen mit 1 bis etwa 6 C-Atomen und Alkylendiaminen, insbesondere Alkylendiaminen mit 2 bis etwa 10 C-Atomen, erhältlich sind.

Die Ausstattung der Polyamide mit entsprechenden Alkoxysilangruppen erfolgt in der bereits oben für Polyether oder Polyester beschriebenen Art.

In einer weiteren bevorzugten Ausführungsform der vorliegenden Erfindung werden als organische Polymere Polyacrylsäureester oder Polymethacrylsäureester eingesetzt. Polyacrylsäureester und Polymethacrylsäureester lassen sich in einer dem Fachmann bekannten Art und Weise durch radikalische Polymerisation von entsprechenden Estern der Acrylsäure oder Methacrylsäure erhalten. Geeignete Ester der Acrylsäure oder der Methacrylsäure sind beispielsweise die Methylester, Ethylester, Propylester, Butylester, Pentylester, Hexylester, Heptylester, Octylester, Nonylester oder Decylester. Die Einbringung von Alkoxysilangruppen in das organische Polymere kann beispielsweise dadurch geschehen, dass ein entsprechend funktionalisiertes Alkoxysilan mit in die Polymerkette einpolymerisiert wird, wie es beispielsweise grundsätzlich in der EP-A 0 818 496 beschrieben wird, deren die Grundsätzliche Ausführung einer solchen Polymerisation betreffende Offenbarung als Bestandteil des vorliegenden Textes angesehen wird. Zur Einpolymerisierung geeignete Monomere sind beispielsweise Monomere der allgemeinen Formel III, in der L für einen Rest mit mindestens einer olefinisch ungesättigten Doppelbindung steht, die unter den bei der Polymerisationsreaktion herrschenden Redaktionsbedingungen in die Polymerkette eingebaut wird.

Es ist jedoch ebenso möglich, das organische Polymere vor Einbringung der Alkoxysilangruppen entsprechend zu funktionalisieren und anschließend in einer polymeranalogen Reaktion mit einem entsprechend funktionalisierten Alkoxysilan, beispielsweise einem Alkoxysilan der allgemeinen Formel III, umzusetzen. Dies kann beispielsweise dadurch geschehen, dass im organischen Polymeren ein bestimmter Prozentsatz an hydroxyfunktionalisierten Acrylsäureestern oder Methacrylsäureestern einpolymerisiert wird. Zu diesem Zweck geeignete Monomere sind beispielsweise die Hydroxyethyl, Hydroxypropyl, Hydroxybutyl, Hydroxypentyl, Hydroxyhexyl, Hydroxyheptyl oder Hydroxyoctylester der Acrylsäure oder Methacrylsäure.

Ebenfalls zur Funktionalisierung von Polyacrylatestern oder Polymethacrylatestern mit den Silylgruppen der allgemeinen Formel I geeignet ist die Pfropfreaktion. Unter Pfropfreaktionen werden Reaktionen verstanden, bei denen Pfropfpolymere gebildet werden. Pfropfpolymere entstehen z.B. dann, wenn olefinisch ungesättigte Verbindungen in Gegenwart vorgefertigter Polymerer, die als Makroinitiatoren u. damit gleichzeitig als Pfropfsubstrate dienen, radikalisch initiiert umgesetzt werden. Die Initiierung kann beispielsweise durch chemische, oder thermische Spaltung von Peroxid- oder Diazo-Gruppen an der Polymerkette der Pfropfsubstrate sowie durch Einwirkung von Strahlen initiiert werden.

Ebenfalls im Rahmen der vorliegenden Erfindung geeignet ist sind Polyolefine wie Polyethylen, die mindestens eine, beispielsweise zwei oder mehr Silylgruppen der allgemeinen Formel I aufweisen.

Die genannten Silylgruppen tragenden Polymeren können in den erfindungsgemäßen Zubereitungen alleine oder als Gemisch aus zwei oder mehr davon eingesetzt werden.

Weitere geeignete organische Polymere sind beispielsweise Polybutadiene, wie sie durch Polymerisation von Butadien erhältlich sind. Eine Funktionalisierung der Butadiene mit Alkoxysilangruppen kann entsprechend der bereits bei den Polyacrylaten und Polymethacrylaten genannten Methodik, beispielsweise durch Pfropfreaktion, erfolgen.

Im Rahmen einer weiteren bevorzugten Ausführungsform der vorliegenden Erfindung werden als organische Polymere Derivate von Fettstoffen, insbesondere von Fettsäureestern eingesetzt, wie sie bereits oben beschrieben wurden.

Fettstoffe mit Silylgruppen, wie sie in den erfindungsgemäßen Zusammensetzungen eingesetzt werden, lassen sich beispielsweise durch Umsetzung entsprechend funktionalisierter Fettstoffe wie Rizinusöl, Maleinsäureanhydrid (MSA)-gepfropfter Triglyceride oder epoxidierter Triglyceride mit einer geeignet funktionalisierten Verbindung der allgemeinen Formeln II oder III erhalten.

Die im Rahmen der erfindungsgemäßen Zusammensetzungen als Zusatzstoffe eingesetzten organischen Polymeren können beispielsweise nur eine Silylgruppe der allgemeinen Formel I tragen. Im Rahmen einer bevorzugten Ausführungsform der vorliegenden Erfindung tragen die Polymeren jedoch mindestens 2, beispielsweise 2 bis etwa 100, vorzugsweise etwa 2 bis etwa 10 Silylgruppen der allgemeinen Formel II.

Geeignete erfindungsgemäße Zusammensetzungen weisen beispielsweise die folgende ungefähre Zusammensetzung auf:

| | | | |
|---|---|---|---|
| 40 | - | 80 | Gew.-% Präpolymeres |
| 0 | - | 25 | Gew.-% Weichmacher |
| 0 | - | 30 | Gew.-% Flammschutzmittel |
| 0 | - | 5 | Gew.-% Schaumstabilisator |
| 0 | - | 2 | Gew.-% Katalysator(en) |
| 0 | - | 5 | Gew.-% sonst. Additive |
| 1 | - | 25 | Gew.-% Treibgase. |

Beispielrezeptur bei einer Verwendung als Dicht- und Montageklebstoff oder Allzweckklebstoff:

| | | | |
|---|---|---|---|
| 25 | - | 90 | Gew.-% Präpolymeres |
| 0 | - | 50 | Gew.-% Weichmacher |
| 9 | - | 50 | Gew.-% Füllstoffe |
| 0 | - | 25 | Gew.-% Additive |
| 1 | - | 15 | Gew.-% Katalysator(en). |

Die erfindungsgemäßen Zusammensetzungen lassen sich auf einfache Weise durch Verschäumen in harte, belastbare, haltbare Montageschäumen überführen. Vorzugsweise weist eine erfindungsgemäße Zusammensetzung Eigenschaften auf, die zu einem Schaum mit einer oder mehreren der folgenden Eigenschaften führen:

| | | |
|---|---|---|
| a) | Tack Free Time (TAT): | 5-60 Minuten |
| b) | Dichte: | 15-200 g/l |
| c) | Druckspannung bei 10% Stauchung (DIN 53421): | 2 bis 10 N/cm² |
| d) | Härtungszeit: | 10 Min. - 8 Stunden |
| e) | Schaumstruktur: | fein- bis mittelzellig |
| f) | Brandverhalten (DIN 4102): | Brandklassen B2 oder B3 |

Die erfindungsgemäßen Zusammensetzungen lassen sich auf einfache Weise durch entsprechendes Vermischen der an der Zusammensetzung beteiligten Komponenten herstellen.

Gegenstand der vorliegenden Erfindung ist daher auch ein Verfahren zur Herstellung einer erfindungsgemäßen Zusammensetzung, bei dem mindestens ein Präpolymeres, das mindestens eine Gruppe der allgemeinen Formel I

-X-A-Si(Z)ₙ(OR)₃₋ₙ (I),

worin X für ein gegebenenfalls substituiertes Heteroatom, A für einen Alkylenrest mit 1 bis 12 C-Atomen, Z und R unabhängig voneinander für -CH₃ oder -CH₂-CH₃ und n für 0, 1 oder 2 steht, und mindestens eine Gruppe der allgemeinen Formel II

-N(R¹)-C(O)-Y-R² (II),

worin R¹ für H oder einen linearen oder verzweigten, gesättigten oder ungesättigten Alkylrest mit 1 bis 18 C-Atomen, der Rest R² jeweils für einen linearen oder verzweigten, gesättigten oder ungesättigten Alkylrest mit 1 bis 44 C-Atomen oder einen Rest der allgemeinen Formel R³-(O-CHR⁴-CHR⁴)ₙ-, worin R³ für einen linearen oder verzweigten, gesättigten oder ungesättigten Alkylenrest mit 1 bis 44 C-Atomen, vorzugsweise mit 1 bis 12 C-Atomen oder 2 bis 8 C-Atomen und die Reste R⁴ unabhängig voneinander für H oder einen linearen oder verzweigten Alkylrest mit 1 bis 4 C-Atomen stehen, n für eine Zahl von 1 bis 1000, und Y für O, S oder NR², wobei R² die oben genannte Bedeutung zukommt, steht, aufweist und die Gesamtzahl der funktionellen Gruppen I und II im Präpolymeren mehr als 2 beträgt, oder ein Gemisch aus zwei oder mehr davon, oder
B) ein Präpolymeres, das mindestens eine Gruppe der allgemeinen Formel I

   -X-A-Si(Z)ₙ(OR)₃₋ₙ, (I),
worin X für ein gegebenenfalls substituiertes Heteroatom, A für CH₂, Z und R unabhängig voneinander für -CH₃ oder -CH₂-CH₃ und n für 0, 1 oder 2 steht, wobei das Polymerrückgrat des Präpolymeren mindestens eine Ar-L-Ar verknüpfte aromatische Gruppe enthält, worin L für eine kovalente Bindung, einen linearen oder verzweigten, gesättigten oder ungesättigten Alkylrest mit 1 bis 6 C-Atomen, einen Cycloalkylrest mit 5 bis 12 C-Atomen, einen Arylrest oder Heteroarylrest mit 4 bis 12 C-Atomen oder einen Isocyanurat-, Allophanat-, Harnstoff-, Biuret-, Uretidon-, Carbodiimid- oder Ketoniminrest steht, oder ein Gemisch aus zwei oder mehr davon, oder ein Gemisch aus A) und B) mit mindestens einem Treibmittel, oder einem Gemisch aus zwei oder mehr Treibmitteln, vermischt wird.

Die Erfindung wird nachfolgend durch Beispiele erläutert. Alle Prozentangaben beziehen sich, soweit keine andere Bestimmung angegeben ist, auf Gewichts-prozent (Gew.-%).

### Beispiele:

### Beispiel 1:

In einem 500 ml Reaktionskolben mit Rühr-, Kühl- und Heizmöglichkeiten wurden 67,9 g (0,5 mol NCO) Desmodur VKS70 (Polymer-MDI der Fa. Bayer) vorgelegt und mit 0,05 g Dibutylzinnlaurat versetzt und unter Rühren auf 70°C erwärmt. Es wurden 21,9 g (0,17 mol) 2-Ethylhexanol unter Rühren bei 70-80°C hinzugetropft. Anschließend wurden 107,7 g (0,33 mol) N-(3-Trimethoxysilylpropyl)-asparaginsäuredimethylester unter Rühren bei 60-70°C hinzugetropft. Nach beendeter Zugabe wurde noch 15 Min bei 60°C gerührt und mit 20 g (10 Gew.-%) Mesamoll (Weichmacher, Fa. Bayer) versetzt. In der resultierenden Präpolymermischung ließen sich keine NCO-Gruppen mehr nachweisen.

Mit einem Teil der hergestellten Präpolymermischung wurden Buchenholzplatten verklebt und 7 Tage bei Raumtemperatur gelagert. Die Verklebung zeigte beim Zerreißen eine Festigkeit von 3,1 N/mm².

78 g der Präpolymermischung wurden auf 50°C erwärmt und mit 15 g Tris(monochlorisopropyl)phosphat (Flammschutzmittel) versetzt. Es wurde bei Raumtemperatur mit 1 g Tegostab B 8465 (Schaumstabilisator), 2g Neostann U220 (Dibutylzinndiacetonat, Fa. Kaneka) und 2 g GF99 (Aminosilan, Fa. Wacker) versetzt und mit 20 g Treibmittel 152a vermischt und geschäumt. Es entstand ein feinzelliger, halbharter Schaum mit einer Klebfreienzeit von 20 Min. Dieser Schaum entspricht in seinen Eigenschaften einem kommerziell erhältlichen 1K-PU-Montage-Dosenschaum.

### Beispiel 2:

In einem 500 ml Reaktionskolben mit Rühr-, Kühl- und Heizmöglichkeiten wurden 67,9 g (0,5 mol NCO) Desmodur VKS70 (Polymer-MDI der Fa. Bayer) vorgelegt und mit 0,05 g Dibutylzinnlaurat versetzt und unter Rühren auf 70°C erwärmt. Es wurden 90,1 g (0,17 mol) eines ethoxylierten Fettalkohol (C12/C14 mit 8EO) unter Rühren bei 70-80°C hinzugetropft. Anschließend wurden 107,7 g (0,33 mol) N-(3-Trimethoxysilylpropyl)-asparaginsäuredimethylester unter Rühren bei 60-70°C hinzugetropft. Nach beendeter Zugabe wurde noch 15 Min bei 60°C gerührt. In der resultierenden Präpolymermischung ließen sich keine NCO-Gruppen mehr nachweisen.

93 g der Präpolymermischung wurden bei Raumtemperatur mit 1 g Tegostab B 8465 (Schaumstabilisator), 2 g Neostann U220 (Dibutylzinndiacetonat, Fa. Kaneka) und 2 g GF99 (Aminosilan, Fa. Wacker) versetzt und mit 20 g Treibmittel 152a vermischt und geschäumt. Es entstand ein feinzelliger, weich-elastischer Schaum mit einer Klebfreienzeit von 30 Min.

### Vergleichsbeispiel 1:

In einem 500 ml Reaktionskolben mit Rühr-, Kühl- und Heizmöglichkeiten wurden 67,9 g (0,5 mol NCO) Desmodur VKS70 (Polymer-MDI der Fa. Bayer) vorgelegt und mit 0,06 g Dibutylzinnlaurat versetzt und unter Rühren auf 60°C erwärmt. Es wurden 161,5 g (0,5 mol) N-(3-Trimethoxysilylpropyl)asparaginsäuredimethylester unter Rühren bei 60-70°C hinzugetropft. Nach beendeter Zugabe wurde noch 15 Min bei 60°C gerührt. In der resultierenden Präpolymermischung ließen sich keine NCO-Gruppen mehr nachweisen.

74 g der Präpolymermischung wurden auf 50°C erwärmt und mit 20 g Tris(monochlorisopropyl)phosphat (Flammschutzmittel) und mit 10 g Mesamoll (Weichmacher, Fa. Bayer) versetzt. Trotz der zugegebenen Menge Flammschutzmittel und Weichmacher ist die Viskosität der Mischung zu hoch zur weiteren Verarbeitung zu einem Treibgasschaums.

### Beispiel 3:

In einem 500 ml Reaktionskolben mit Rühr-, Kühl- und Heizmöglichkeiten wurden 67,9 g (0,5 mol NCO) Desmodur VKS70 (Polymer-MDI der Fa. Bayer) vorgelegt und mit 0,06 g Dibutylzinnlaurat versetzt und unter Rühren auf 70°C erwärmt. Es wurden 21,9 g (0,17 mol) 2-Ethylhexanol unter Rühren bei 70-80°C hinzugetropft. Anschließend wurden 78 g (0,33 mol) N-Butyl-aminopropyltrimethoxysilan (Dynasilan 1189, Fa. Sivento) unter Rühren bei 60-70°C hinzugetropft. Nach beendeter Zugabe wurde noch 15 Min bei 60°C gerührt und mit 6,7 g (4 Gew.-%) Mesamoll (Weichmacher, Fa. Bayer) versetzt. In der resultierenden Präpolymermischung ließen sich keine NCO-Gruppen mehr nachweisen.

Mit einem Teil der hergestellten Präpolymermischung wurden Buchenholzplatten verklebt und 7 Tage bei Raumtemperatur gelagert. Die Verklebung zeigte beim Zerreißen eine Festigkeit von 2,7 N/mm².

78 g der Präpolymermischung wurden auf 50°C erwärmt und mit 15 g Tris(monochlorisopropyl)phosphat (Flammschutzmittel) versetzt. Es wurde bei Raumtemperatur mit 1 g Tegostab B 8465 (Schaumstabilisator), 2g Neostann U220 (Dibutylzinndiacetonat, Fa. Kaneka) und 2 g GF99 (Aminosilan, Fa. Wacker) versetzt und mit 20 g Treibmittel 152a vermischt und geschäumt. Es entstand ein feinzelliger, halb-harter Schaum mit einer Klebfreienzeit von 20 Min. Dieser Schaum entspricht in seinen Eigenschaften einem kommerziell erhältlichen 1K-PU-Montage-Dosenschaum.

### Vergleichsbeispiel 2:

In einem 500 ml Reaktionskolben mit Rühr-, Kühl- und Heizmöglichkeiten wurden 67,9 g (0,5 mol NCO) Desmodur VKS70 (Polymer-UDI der Fa. Bayer) vorgelegt und mit 0,06 g Dibutylzinnlaurat versetzt und unter Rühren auf 60°C erwärmt. Es wurden 117,7 g (0,5 mol) N-Butyl-aminopropyltrimethoxysilan (Dynasilan 1189, Fa. Sivento) unter Rühren bei 60-70°C hinzugetropft. Nach beendeter Zugabe wurde noch 15 Min bei 60 °C gerührt und mit 7,4 g (4 Gew.-%) Mesamoll (Weichmacher, Fa. Bayer) versetzt. In der resultierenden Präpolymermischung ließen sich keine NCO-Gruppen mehr nachweisen.

77 g der Präpolymermischung wurden auf 50°C erwärmt und mit 20 g Tris(monochlorisopropyl)phosphat (Flammschutzmittel) versetzt. Trotz der zugegebenen Menge Flammschutzmittel und Weichmacher ist die Viskosität der Mischung zu hoch zur weiteren Verarbeitung zu einem Treibgasschaums.

### Beispiel 4:

In einem 500 ml Reaktionskolben mit Rühr-, Kühl- und Heizmöglichkeiten wurden 67,9 g (0,5 mol NCO) Desmodur VKS70 (Polymer-MDI der Fa. Bayer) vorgelegt und mit 0,06 g Dibutylzinnlaurat versetzt und unter Rühren auf 70°C erwärmt. Es wurden 21,9 g (0,17 mol) 2-Ethylhexanol unter Rühren bei 70-80°C hinzugetropft. Anschließend wurden 102,2 g (0,37 mol) N-Cyclohexyl-aminomethyltriethoxysilan unter Rühren bei 60-70°C hinzugetropft. Nach beendeter Zugabe wurde noch 15 Min bei 60°C gerührt und mit 13,3 g (7 Gew.-%) Mesamoll (Weichmacher, Fa. Bayer) versetzt. In der resultierenden Präpolymermischung ließen sich keine NCO-Gruppen mehr nachweisen.

79 g der Präpolymermischung wurden auf 50°C erwärmt und mit 20 g Tris(monochlorisopropyl)phosphat (Flammschutzmittel) versetzt. Es wurde bei Raumtemperatur 1 g Tegostab B 8465 (Schaumstabilisator) zugegeben und mit 20 g Treibmittel 152a vermischt und geschäumt. Es entstand ein feinzelliger, leicht spröder Schaum mit einer Klebfreienzeit von nur 2 Min. Zur Bildung dieses Schaums müssen keine weiteren Zinn- oder Aminkatalysatoren zugefügt wurden.

### Beispiel 5:

In einem 500 ml Reaktionskolben mit Rühr-, Kühl- und Heizmöglichkeiten wurden 67,9 g (0,5 mol NCO) Desmodur VKS70 (Polymer-NMI der Fa. Bayer) vorgelegt und mit 0,06 g Dibutylzinnlaurat versetzt und unter Rühren auf 70°C erwärmt. Es wurden 10,9 g (0,09 mol) 2-Ethylhexanol unter Rühren bei 70-80°C hinzugetropft. Anschließend wurden 127,6 g (0,46 mol) N-Cyclohexyl-aminomethyltriethoxysilan unter Rühren bei 60-70°C hinzugetropft. Nach beendeter Zugabe wurde noch 15 Min bei 60°C gerührt und mit 33,3 g (16 Gew.-%) Mesamoll (Weichmacher, Fa. Bayer) versetzt. In der resultierenden Präpolymermischung ließen sich keine NCO-Gruppen mehr nachweisen.

99 g der Präpolymermischung wurden mit 1 g Tegostab B 8465 (Schaumstabilisator) versetzt und mit 20 g Treibmittel 152a vermischt und geschäumt. Es entstand ein feinzelliger, harter und etwas spröder Schaum mit einer Klebfreienzeit von unter 1 Min. Zur Bildung dieses Schaums müssen keine weiteren Zinn- oder Aminkatalysatoren zugefügt wurden.

### Beispiel 6:

In einem 500 ml Reaktionskolben mit Rühr-, Kühl- und Heizmöglichkeiten wurden 67,9 g (0,5 mol NCO) Desmodur VKS70 (Polymer-MDI der Fa. Bayer) vorgelegt und mit 0,05 g Dibutylzinnlaurat versetzt und unter Rühren auf 70°C erwärmt. Es wurden 90,1 g (0,17 mol) eines ethoxylierten Fettalkohol (C12/C14 mit 8EO) unter Rühren bei 70-80°C hinzugetropft. Anschließend wurden 90,9 g (0,33 mol) N-Cyclohexyl-aminomethyltriethoxysilan unter Rühren bei 60-70°C hinzugetropft. Nach beendeter Zugabe wurde noch 15 Min bei 60°C gerührt. In der resultierenden Präpolymermischung ließen sich keine NCO-Gruppen mehr nachweisen.

Mit einem Teil der hergestellten Präpolymermischung wurden Buchenholzplatten verklebt und 7 Tage bei Raumtemperatur gelagert. Die Verklebung zeigte beim Zerreißen eine Festigkeit von 3,9 N/mm² (Holzbruch).

96 g der Präpolymermischung wurden bei Raumtemperatur mit 1 g Tegostab B 8465 (Schaumstabilisator), 1 g Neostann U220 (Dibutylzinndiacetonat, Fa. Kaneka) und 1 g GF99 (Aminosilan, Fa. Wacker) versetzt und mit 20 g Treibmittel 152a vermischt und geschäumt. Es entstand ein feinzelliger, halb-harter Schaum mit einer Klebfreienzeit von 3 Min. Dieser Schaum entspricht in seinen Eigenschaften einem kommerziell erhältlichen 1K-PU-Monatage-Dosenschaum.

### Beispiel 7:

In einem 500 ml Reaktionskolben mit Rühr-, Kühl- und Heizmöglichkeiten wurden 67,9 g (0,5 mol NCO) Desmodur VKS70 (Polymer-MDI der Fa. Bayer) vorgelegt und mit 0,06 g Dibutylzinnlaurat versetzt und unter Rühren auf 60°C erwärmt. Es wurden 137,8 g (0,5 mol) N-Cyclohexyl-aminomethyltriethoxysilan und 17,1 g (0,05 mol) Bis-(trimethoxysilylpropyl)amin (Silquest 1170, Fa. Crompton/OSi) unter Rühren bei 60-70°C hinzugetropft. Nach beendeter Zugabe wurde noch 15 Min bei 60 °C gerührt und mit 41 g (20 Gew.-%) Mesamoll (Weichmacher, Fa. Bayer) versetzt. In der resultierenden Präpolymermischung ließen sich keine NCO-Gruppen mehr nachweisen.

Mit einem Teil der hergestellten Präpolymermischung wurden Buchenholzplatten verklebt und 7 Tage bei Raumtemperatur gelagert. Die Verklebung zeigte beim Zerreißen eine Festigkeit von 1,5 N/mm².

80 g der Präpolymermischung wurden mit 0,05 g Neostann U220 (Dibutylzinndiacetonat, Fa. Kaneka) und 1g Tegostab B 8465 (Schaumstabilisator) versetzt und mit 20 g Treibmittel 152a vermischt und geschäumt. Es entstand ein feinzelliger, harter und spröder Schaum mit einer Klebfreienzeit von unter 1 Min. Zur Bildung dieses Schaums müssen keine weiteren Zinn- oder Aminkatalysatoren zugefügt wurden.

### Beispiel 8:

In einem 500 ml Reaktionskolben mit Rühr-, Kühl- und Heizmöglichkeiten wurden 67,9 g (0,5 mol NCO) Desmodur VKS70 (Polymer-MDI der Fa. Bayer) vorgelegt und mit 0,06 g Dibutylzinnlaurat versetzt und unter Rühren auf 70°C erwärmt. Es wurden 21,9 g (0,17 mol) 2-Ethylhexanol) unter Rühren bei 70-80°C hinzugetropft. Anschließend wurden 76,1 g (0,33 mol) N-Phenyl-aminomethyltrimethoxysilan unter Rühren bei 60-70°C hinzugetropft. Nach beendeter Zugabe wurde noch 15 Min bei 60°C gerührt. Es wurden 16,6 g (10 Gew.-%) Mesamoll (Weichmacher, Fa. Bayer) zugegeben. In der resultierenden Präpolymermischung ließen sich keine NCO-Gruppen mehr nachweisen.

Mit einem Teil der hergestellten Präpolymermischung wurden Buchenholzplatten verklebt und 7 Tage bei Raumtemperatur gelagert. Die Verklebung zeigte beim Zerreißen eine Festigkeit von 5,8 N/mm² (Holzbruch).

84 g der Präpolymermischung wurden auf 50°C erwärmt und mit 15 g Tris(monochlorisopropyl)phosphat (Flammschutzmittel) versetzt. Es wurde bei Raumtemperatur 1 g Tegostab B 8465 (Schaumstabilisator) zugegeben und mit 20 g Treibmittel 152a vermischt und geschäumt. Es entstand ein etwas grobzelliger, weicher und elastischer Schaum mit einer Klebfreienzeit von 10 Min. Zur Bildung dieses Schaums müssen keine weiteren Zinn- oder Aminkatalysatoren zugefügt wurden.

### Beispiel 9:

In einem 500 ml Reaktionskolben mit Rühr-, Kühl- und Heizmöglichkeiten wurden 67,9 g (0,5 mol NCO) Desmodur VKS70 (Polymer-MDI der Fa. Bayer) vorgelegt und mit 0,06 g Dibutylzinnlaurat versetzt und unter Rühren auf 70°C erwärmt. Es wurden 10,9 g (0,09 mol) 2-Ethylhexanol) unter Rühren bei 70-80°C hinzugetropft. Anschließend wurden 95,2 g (0,41 mol) N-Phenyl-aminomethyltrimethoxysilan unter Rühren bei 60-70°C hinzugetropft. Nach beendeter Zugabe wurde noch 15 Min bei 60°C gerührt. Es wurden 17,4 g (10 Gew.-%) Mesamoll (Weichmacher, Fa. Bayer) zugegeben. In der resultierenden Präpolymermischung ließen sich keine NCO-Gruppen mehr nachweisen.

Mit einem Teil der hergestellten Präpolymermischung wurden Buchenholzplatten verklebt und 7 Tage bei Raumtemperatur gelagert. Die Verklebung zeigte beim Zerreißen eine Festigkeit von 5,2 N/mm² (Holzbruch).

84 g der Präpolymermischung wurden auf 50°C erwärmt und mit 15 g Tris(monochlorisopropyl)phosphat (Flammschutzmittel) versetzt. Es wurde bei Raumtemperatur 1 g Tegostab B 8465 (Schaumstabilisator) zugegeben und mit 20 g Treibmittel 152a vermischt und geschäumt. Es entstand ein feinzelliger Schaum mit einer Klebfreienzeit von 10 Min. Zur Bildung dieses Schaums müssen keine weiteren Zinn- oder Aminkatalysatoren zugefügt wurden.

### Beispiel 10:

In einem 500 ml Reaktionskolben mit Rühr-, Kühl- und Heizmöglichkeiten wurden 67,9 g (0,5 mol NCO) Desmodur VKS70 (Polymer-MDI der Fa. Bayer) vorgelegt und mit 0,06 g Dibutylzinnlaurat versetzt und unter Rühren auf 60°C erwärmt. Es wurden 114,2 g (0,5 mol) N-Phenyl-aminomethyltrimethoxysilan unter Rühren bei 60-70°C hinzugetropft. Nach beendeter Zugabe wurde noch 15 Min bei 60 °C gerührt. Es wurden 18,3 g (10 Gew.-%) Mesamoll (Weichmacher, Fa. Bayer) zugegeben. In der resultierenden Präpolymermischung ließen sich keine NCO-Gruppen mehr nachweisen.

Mit einem Teil der hergestellten Präpolymermischung wurden Buchenholzplatten verklebt und 7 Tage bei Raumtemperatur gelagert. Die Verklebung zeigte beim Zerreißen eine Festigkeit von 3,5 N/mm².

84 g der Präpolymermischung wurden auf 50°C erwärmt und mit 15 g Tris(monochlorisopropyl)phosphat (Flammschutzmittel) versetzt. Es wurde bei Raumtemperatur 1 g Tegostab B 8465 (Schaumstabilisator) zugegeben und mit 20 g Treibmittel 152a vermischt und geschäumt. Es entstand ein feinzelliger Schaum mit einer Klebfreienzeit von 5 Min. Zur Bildung dieses Schaums müssen keine weiteren Zinn- oder Aminkatalysatoren zugefügt werden.

## Patentansprüche

1. Präpolymeres, das mindestens eine Gruppe der allgemeinen Formel I
-X-A-Si(Z)ₙ(OR)₃₋ₙ (I),
worin X für ein gegebenenfalls substituiertes Heteroatom, A für einen Alkylenrest mit 1 bis 12 C-Atomen, Z und R unabhängig voneinander für-CH₃ oder -CH₂CH₃ und n für 0, 1 oder 2 steht, und mindestens eine Gruppe der allgemeinen Formel II
-N(R¹)-C(O)-Y-R² (II),
worin R¹ für H oder einen linearen oder verzweigten, gesättigten oder ungesättigten Alkylrest mit 1 bis 18 C-Atomen, der Rest R² jeweils für einen linearen oder verzweigten, gesättigten oder ungesättigten Alkylrest mit 1 bis 44 C-Atomen oder einen Rest der allgemeinen Formel R³-(O-CHR⁴-CHR⁴)ₙ-, worin R³ für einen linearen oder verzweigten, gesättigten oder ungesättigten Alkylenrest mit 1 bis 44 C-Atomen und die Reste R⁴ unabhängig voneinander für H oder einen linearen oder verzweigten Alkylrest mit 1 bis 4 C-Atomen stehen, n für eine Zahl von 1 bis 1000, und Y für O, S oder NR², wobei R² die oben genannte Bedeutung zukommt, steht, aufweist und die Gesamtzahl der funktionellen Gruppen I und II im Präpolymeren mehr als 2 beträgt und das Polymerrückgrat auf polymerem MDI oder einem Anilin-Formaldehyd-Kondensat basiert.

2. Präpolymeres nach Anspruch 1, **dadurch gekennzeichnet, dass** das Polymerrückgrat des Präpolymeren mindestens eine Ar-L-Ar verknüpfte aromatische Gruppe enthält, worin L für eine kovalente Bindung, einen linearen oder verzweigten, gesättigten oder ungesättigten Alkylrest mit 1 bis 6 C-Atomen, einen Cycloalkylrest mit 5 bis 12 C-Atomen, einen Arylrest oder Heteroarylrest mit 4 bis 12 C-Atomen oder einen Isocyanurat-, Allophanat-, Harnstoff-, Biuret-, Uretidon-, Carbodiimid- oder Ketoniminrest steht.

3. Präpolymeres nach Anspruch 1 oder 2, **dadurch gekennzeichnet, dass** das Molekulargewicht des Präpolymeren 4000 oder weniger beträgt.

4. Präpolymeres nach Anspruch 1 oder 2, **dadurch gekennzeichnet, dass** das Molekulargewicht des Präpolymeren mehr als 4000 beträgt.

5. Zusammensetzung, mindestens enthaltend ein Präpolymeres nach einem der Ansprüche 1 bis 4 oder ein Gemisch aus zwei oder mehr davon, und ein Treibmittel oder ein Gemisch aus zwei oder mehr Treibmitteln.

6. Zusammensetzung nach Anspruch 5, **dadurch gekennzeichnet, dass** die Zusammensetzung verschäumbar ist und zu einem Schaum mit einer oder mehreren der folgenden Eigenschaften aushärtet:
| | | |
|---|---|---|
| a) | Tack Free Time (TAT): | 5 - 60 Minuten |
| b) | Dichte: | 15 - 200 g/l |
| c) | Druckspannung bei 10% | |
| | Stauchung (DIN 53421): | 2 bis 10 N/cm² |
| d) | Härtungszeit: | 10 Min. - 8 Stunden |
| e) | Schaumstruktur: | fein- bis mittelzellig |
| f) | Brandverhalten (DIN 4102): | Brandklassen B2 oder B3. |

7. Verfahren zur Herstellung einer Zusammensetzung nach einem der Ansprüche 1 bis 5, bei dem
A) mindestens ein Präpolymeres, das mindestens eine Gruppe der allgemeinen Formel I
-X-A-Si(Z)ₙ(OR)₃₋ₙ (I)
worin X für ein gegebenenfalls substituiertes Heteroatom, A für einen Alkylenrest mit 1 bis 12 C-Atomen, Z und R unabhängig voneinander für -CH₃ oder -CH₂-CH₃ und n für 0, 1 oder 2 steht, und mindestens eine Gruppe der allgemeinen Formel II
-N(R¹)-C(O)-Y-R² (II),
worin R¹ für H oder einen linearen oder verzweigten, gesättigten oder ungesättigten Alkylrest mit 1 bis 18 C-Atomen, der Rest R² jeweils für einen linearen oder verzweigten, gesättigten oder ungesättigten Alkylrest mit 1 bis 44 C-Atomen oder einen Rest der allgemeinen Formel R³-(O-CHR⁴-CHR⁴)ₙ-, worin R³ für einen linearen oder verzweigten, gesättigten oder ungesättigten Alkylenrest mit 1 bis 44 C-Atomen und die Reste R⁴ unabhängig voneinander für H oder einen linearen oder verzweigten Alkylrest mit 1 bis 4 C-Atomen stehen, n für eine Zahl von 1 bis 1000, und Y für O, S oder NR², wobei R² die oben genannte Bedeutung zukommt, steht, aufweist und die Gesamtzahl der funktionellen Gruppen I und II im Präpolymeren mehr als 2 beträgt, oder ein Gemisch aus zwei oder mehr davon, oder
B) ein Präpolymeres, das mindestens eine Gruppe der allgemeinen Formel I
-X-A-Si(Z)ₙ(OR)₃₋ₙ (I),
worin X für ein gegebenenfalls substituiertes Heteroatom, A für CH₂, Z und R unabhängig voneinander für -CH₃ oder -CH₂-CH₃ und n für 0, 1 oder 2 steht, wobei das Polymerrückgrat des Präpolymeren mindestens eine Ar-L-Ar verknüpfte aromatische Gruppe enthält, worin L für eine kovalente Bindung, einen linearen oder verzweigten, gesättigten oder ungesättigten Alkylrest mit 1 bis 6 C-Atomen, einen Cycloalkylrest mit 5 bis 12 C-Atomen, einen Arylrest oder Heteroarylrest mit 4 bis 12 C-Atomen oder einen Isocyanurat-, Allophanat-, Harnstoff-, Biuret-, Uretidon-, Carbodiimid- oder Ketoniminrest steht, oder ein Gemisch aus zwei oder mehr davon, oder ein Gemisch aus A) und B) mit mindestens einem Treibmittel, oder einem Gemisch aus zwei oder mehr Treibmitteln, vermischt wird.

8. Verwendung einer Zusammensetzung nach einem der Ansprüche 5 oder 6, oder einer nach Anspruch 7 hergestellten Zusammensetzung als Klebstoff oder Montageschaum.

9. Klebstoff oder Montageschaum, hergestellt unter Verwendung einer Zubereitung nach einem der Ansprüche 5 oder 6 oder einer nach Anspruch 7 hergestellten Zubereitung.

## Claims

1. A prepolymer which contains at least one group corresponding to general formula I:
-X-A-Si(Z)ₙ(OR)₃₋ₙ (I),
in which X is an optionally substituted heteroatom, A is a C₁₋₁₂ alkylene residue, Z and R independently of one another represent -CH₃ or -CH₂-CH₃ and n = 0, 1 or 2,
and at least one group corresponding to general formula (II):
-N(R¹)-C(O)-Y-R² (II),
in which R¹ is H or a linear or branched, saturated or unsaturated C₁₋₁₈ alkyl residue, R² is in each case a linear or branched, saturated or unsaturated C₁₋₄₄ alkyl residue or a residue with the general formula R³-(O-CHR⁴-CHR⁴)ₙ-, where R³ is a linear or branched, saturated or unsaturated C₁₋₄₄ alkylene residue and the residues R⁴ independently of one another represent H or a linear or branched C₁₋₄ alkyl residue, n is a number of 1 to 1,000 and Y is O, S or NR², where R² is as defined above, and the total number of functional groups I and II in the prepolymer is more than 2 and the polymer backbone is based on a polymeric MDI or an aniline/formaldehyde condensation product.

2. The prepolymer as claimed in claim 1, **characterized in that** the polymer backbone of the prepolymer contains at least one Ar-L-Ar linked aromatic group, where L is a covalent bond, a linear or branched, saturated or unsaturated C₁₋₆ alkyl residue, a C₅₋₁₂ cycloalkyl residue, a C₄₋₁₂ aryl residue or heteroaryl residue or an isocyanurate, allophanate, urea, biuret, uretdione, carbodiimide or ketone imine group.

3. The prepolymer as claimed in claim 1 or 2, **characterized in that** the molecular weight of the prepolymer is 4,000 or less.

4. The prepolymer as claimed in claim 1 or 2, **characterized in that** the molecular weight of the prepolymer is more than 4,000.

5. A composition containing at least one prepolymer according to any of claims 1 to 4 or a mixture of two or more thereof and a blowing agent or a mixture of two or more blowing agents.

6. The composition as claimed in claim 5, **characterized in that** the composition is foamable and cures to a foam having one or more of the following properties:
| | | |
|---|---|---|
| a) | tack-free time (TAT): | 5 - 60 minutes |
| b) | density: | 15 - 200 g/l |
| c) | compressive stress at 10% compression (DIN 53421): | 2 to 10 N/cm² |
| d) | cure time: | 10 minutes - 8 hours |
| e) | foam structure: | fine to medium cells |
| f) | burning behavior (DIN 4102): | fire class B2 or B3. |

7. A process for the production of the composition claimed in any of claims 1 to 5, in which
A) at least one prepolymer which contains at least one group corresponding to general formula I:
-X-A-Si(Z)ₙ(OR)₃₋ₙ (I),
in which X is an optionally substituted heteroatom, A is a C₁₋₁₂ alkylene residue, Z and R independently of one another represent -CH₃ or -CH₂-CH₃ and n = 0, 1 or 2,
and at least one group corresponding to general formula (II):
-N(R¹)-C(O)-Y-R² (II),
in which R¹ is H or a linear or branched, saturated or unsaturated C₁₋₁₈ alkyl residue, R² is in each case a linear or branched, saturated or unsaturated C₁₋₄₄ alkyl residue or a residue with the general formula R³-(O-CHR⁴-CHR⁴)ₙ-, where R³ is a linear or branched, saturated or unsaturated C₁₋₄₄ alkylene residue and the residues R⁴ independently of one another represent H or a linear or branched C₁₋₄ alkyl residue, n is a number of 1 to 1,000 and Y is O, S or NR², where R² is as defined above, and the total number of functional groups I and II in the prepolymer is more than 2, or a mixture of two or more thereof or
B) a prepolymer which contains at least one group corresponding to general formula I:
-X-A-Si(Z)ₙ(OR)₃₋ₙ (I),
in which X is an optionally substituted heteroatom, A is CH₂, Z and R independently of one another represent -CH₃ or -CH₂-CH₃ and n = 0, 1 or 2, the polymer backbone of the prepolymer containing at least one Ar-L-Ar linked aromatic group, where L is a covalent bond, a linear or branched, saturated or unsaturated C₁₋₆ alkyl residue, a C₅₋₁₂ cycloalkyl residue, a C₄₋₁₂ aryl residue or heteroaryl residue or an isocyanurate, allophanate, urea, biuret, uretdione, carbodiimide or ketone imine group, or a mixture of two or more thereof or a mixture of A) and B) with at least one blowing agent or a mixture of two or more blowing agents is mixed.

8. Use of a composition claimed in claim 5 or 6 or of a composition produced by the process claimed in claim 7 as an adhesive or assembly foam.

9. An adhesive or assembly foam produced using a composition claimed in claim 5 or 6 or a composition produced by the process claimed in claim 7.

## Revendications

1. Prépolymère, présentant au moins un groupe de formule générale 1
-X-A-Si(Z)ₙ(OR)₃₋ₙ (I),
dans laquelle X représente un hétéroatome le cas échéant substitué, A représente un radical alkylène comprenant 1 à 12 atomes de carbone, Z et R représentent indépendamment l'un de l'autre -CH₃ ou -CH₂-CH₃ et n représente 0, 1 ou 2, et au moins un groupe de formule générale II
-N(R¹)-C(O)-Y-R² (II),
dans laquelle R¹ représente H ou un radical alkyle linéaire ou ramifié, saturé ou insaturé comprenant 1 à 18 atomes de carbone, le radical R² représente à chaque fois un radical alkyle linéaire ou ramifié, saturé ou insaturé, comprenant 1 à 44 atomes de carbone ou un radical de formule générale R³-(O-CHR⁴-CHR⁴)ₙ-, dans laquelle R³ représente un radical alkylène linéaire ou ramifié, saturé ou insaturé comprenant 1 à 44 atomes de carbone et les radicaux R⁴ représentent, indépendamment l'un de l'autre, H ou un radical alkyle linéaire ou ramifié comprenant 1 à 4 atomes de carbone, n représente un nombre de 1 à 1000, et Y représente O, S ou NR², où R² a la signification susmentionnée et le nombre total de groupes fonctionnels I et II dans le prépolymère est supérieur à 2 et l'épine dorsale du polymère est à base de MDI polymère ou d'un produit de condensation aniline-formaldéhyde.

2. Prépolymère selon la revendication 1, **caractérisé en ce que** l'épine dorsale du prépolymère contient au moins un groupe aromatique lié de type Ar-L-Ar, où L représente une liaison covalente, un radical alkyle linéaire ou ramifié, saturé ou insaturé, comprenant 1 à 6 atomes de carbone, un radical cycloalkyle comprenant 5 à 12 atomes de carbone, un radical aryle ou hétéroaryle comprenant 4 à 12 atomes de carbone ou un radical isocyanurate, allophanate, urée, biuret, uretdione, carbodiimide ou cétone-imine.

3. Prépolymère selon la revendication 1 ou 2, **caractérisé en ce que** le poids moléculaire du prépolymère est de 4000 ou moins.

4. Prépolymère selon la revendication 1 ou 2, **caractérisé en ce que** le poids moléculaire du prépolymère est supérieur à 4000.

5. Composition contenant au moins un prépolymère selon l'une quelconque des revendications 1 à 4 ou un mélange de deux de ces prépolymères ou plus et un agent gonflant ou un mélange de deux agents gonflants ou plus.

6. Composition selon la revendication 5, **caractérisée en ce que** la composition peut être moussée et durcit en une mousse présentant une ou plusieurs des propriétés suivantes :
| | | |
|---|---|---|
| a) | Tack Free Time (TAT - temps hors poussière) : | 5-60 minutes |
| b) | Densité : | 15-200 g/l |
| c) | Contrainte de compression à un écrasement de 10% (DIN 53421) : | 2 à 10 N/cm² |
| d) | Temps de durcissement : | 10 minutes - 8 heures |
| e) | Structure de la mousse : | à pores fins à moyens |
| f) | Tenue au feu (DIN 4102) : | classe de feu B2 ou B3. |

7. Procédé pour la préparation d'une composition selon l'une quelconque des revendications 1 à 5, dans lequel on mélange
A) au moins un prépolymère, présentant au moins un groupe de formule générale 1
-X-A-Si(Z)ₙ(OR)₃₋ₙ (I),
dans laquelle X représente un hétéroatome le cas échéant substitué, A représente un radical alkylène comprenant 1 à 12 atomes de carbone, Z et R représentent indépendamment l'un de l'autre -CH₃ ou -CH₂-CH₃ et n représente 0, 1 ou 2, et au moins un groupe de formule générale II
-N(R¹)-C(O)-Y-R² (II),
dans laquelle R¹ représente H ou un radical alkyle linéaire ou ramifié, saturé ou insaturé comprenant 1 à 18 atomes de carbone, le radical R² représente à chaque fois un radical alkyle linéaire ou ramifié, saturé ou insaturé, comprenant 1 à 44 atomes de carbone ou un radical de formule générale R³-(O-CHR⁴-CHR⁴)ₙ-, dans laquelle R³ représente un radical alkylène linéaire ou ramifié, saturé ou insaturé comprenant 1 à 44 atomes de carbone et les radicaux R⁴ représentent, indépendamment l'un de l'autre, H ou un radical alkyle linéaire ou ramifié comprenant 1 à 4 atomes de carbone, n représente un nombre de 1 à 1000, et Y représente O, S ou NR², où R² a la signification susmentionnée et le nombre total de groupes fonctionnels I et II dans le prépolymère est supérieur à 2 ou un mélange de deux de ces prépolymères ou plus, ou
B) un prépolymère, présentant au moins un groupe de formule générale 1
-X-A-Si(Z)ₙ(OR)₃₋ₙ (I),
dans laquelle X représente un hétéroatome le cas échéant substitué, A représente CH₂, Z et R représentent, indépendamment l'un de l'autre -CH₃ ou -CH₂-CH₃ et n représente 0, 1 ou 2, où l'épine dorsale du prépolymère contient au moins un groupe aromatique lié de type Ar-L-Ar, où L représente une liaison covalente, un radical alkyle linéaire ou ramifié, saturé ou insaturé, comprenant 1 à 6 atomes de carbone, un radical cycloalkyle comprenant 5 à 12 atomes de carbone, un radical aryle ou hétéroaryle comprenant 4 à 12 atomes de carbone ou un radical isocyanurate, allophanate, urée, biuret, uretdione, carbodiimide ou cétone-imine, ou un mélange de deux de ces prépolymères ou plus, ou un mélange de A) et B) avec au moins un agent gonflant ou un mélange de deux agents gonflants ou plus.

8. Utilisation d'une composition selon l'une quelconque des revendications 5 ou 6, ou d'une composition préparée selon la revendication 7 comme adhésif ou mousse de montage.

9. Adhésif ou mousse de montage, préparé(e) en utilisant une composition selon l'une quelconque des revendications 5 ou 6 ou une composition préparée selon la revendication 7.
